# EUROPEAN PATENT APPLICATION

(11) **EP 2 180 221 A1**
(43) Date of publication of application: **28.04.2010**
(21) Application number: 08833240.8
(22) Date of filing: 25.09.2008
(51) Int. Cl.: F16L 19/08, F16L 25/00, F24F 1/00

(54) **BITE TYPE PIPE CONNECTION STRUCTURE, VALVE, BITE TYPE PIPE JOINT, AND FREEZING DEVICE**

(30) Priority: 28.09.2007 JP 2007256130; 19.09.2008 JP 2008241658
(71) Applicant: Daikin Industries, Ltd., Osaka 530-8323 (JP)
(72) Inventor: NAKATA, Haruo, Sakai-shi Osaka 591-8511 (JP); KITAGAWA, Takeshi, Sakai-shi Osaka 591-8511 (JP); SHIMAMURA, Takashi, Sakai-shi Osaka 591-8511 (JP); HIRATA, Hiroyuki, Settsu-shi Osaka 566-8585 (JP); HASHIMOTO, Akira, Settsu-shi Osaka 566-8585 (JP); SHIMOMACHI, Takanori, Settsu-shi Osaka 566-8585 (JP)
(74) Representative: HOFFMANN EITLE
(86) International application number: PCT/JP2008/067285
(87) International publication number: WO 2009/041488

(57) **Abstract**

A bite type pipe connection structure is used to connect a large diameter pipe that is previously set as a standard specification. The bite type pipe connection structure includes a spacer 71 that is used for connecting a small diameter pipe P3 and serves as insertion port adjusting means for adjusting a gap between the insertion port 16 and the small diameter pipe P3, a step portion 73 serving as a step portion for small diameter that regulates the position of the tip of the small diameter pipe P3, and insertion-through hole adjusting means for bridging a gap between the insertion-through hole for large diameter of a ferrule for large diameter and the small diameter pipe P3 to adjust the insertion-through hole. The insertion-through hole adjusting means is obtained by replacing the ferrule for large diameter 3 with a ferrule for small diameter 6. This makes it possible to connect the small diameter pipe P3 with a joint main body 1 attached to an apparatus.

## Description

### TECHNICAL FIELD

The present invention relates to a bite type pipe connection structure capable of connecting pipes having different diameters, and a valve, a pipe joint and a freezing device using the bite type pipe connection structure.

### BACKGROUND ART

A pipe connection structure used, for example, in a valve or a pipe joint normally allows pipes having the same diameter to be connected. However, pipes having diameters different from a standard specification are commercially available for on-site piping.
Therefore, for example, in a case where a pipe is connected to an indoor unit or an outdoor unit in the on-site piping work for a separate type air conditioner, a pipe that is previously set as a standard specification is not always connected. In order to solve such a problem, conventionally, a flared type joint has been used. For example, a pipe joint disclosed in Patent Document 1 is intended to be used not for connection of different diameter pipes by different standards, but for connection of different diameter pipes in a multi-split type air conditioner. However, they involve the same kind of problems. The objective of the present invention is to connect such different diameter pipes.

Additionally, in the field of air conditioners, the pressure of such refrigerants is becoming high as refrigerants to be used are being changed to substitutes for chlorofluorocarbon. Therefore, an attempt has been made to put a bite type pipe connection structure to practical use, instead of a flared type pipe connection structure. Concerning a bite type pipe connection structure, however, a structure that allows different diameter pipes to be connected has not been sufficiently studied yet.
Patent Document 1: Japanese Patent No. 2629546

### DISCLOSURE OF THE INVENTION

It is an objective of the present invention to provide a bite type pipe connection structure designed for a large diameter pipe having a predetermined diameter as a reference, in which the bite type pipe connection structure is capable of connecting a small diameter pipe having a smaller diameter than the predetermined diameter, and a valve, a pipe joint and a freezing device using the bite type pipe connection structure.

To achieve the foregoing objective and in accordance with a first aspect of the present invention, there is provided a bite type pipe connection structure comprising: a joint main body; a coupling member for large diameter that is screwed into the joint main body and externally arranged around a large diameter pipe to be connected to the joint main body; and a ferrule for large diameter externally arranged, together with the coupling member for large diameter, around the large diameter pipe and holding the large diameter pipe by biting into the large diameter pipe. According to the bite type pipe connection structure, an insertion port for large diameter through which the large diameter pipe is inserted is formed on the axis of the joint main body; a step portion for large diameter that regulates the position of a tip of the large diameter pipe is formed at the deepest portion of the insertion port for large diameter; a cam surface against which the tip of the ferrule for large diameter is pressed is formed at the entrance of the insertion port for large diameter; a through hole for large diameter through which the large diameter pipe is passed is formed on the axis of the coupling member for large diameter; a pressing surface against which the ferrule for large diameter is pressed is provided on a lateral side of the coupling member for large diameter closer to the joint main body; an insertion-through hole for large diameter in which the large diameter pipe is inserted is formed on the axis of the ferrule for large diameter; and the outer circumferential surface of the ferrule for large diameter has a tapered surface reduced in diameter toward the joint main body. In addition, the bite type pipe connection structure has insertion port adjusting means, which is used to connect a small diameter pipe to the joint main body and adjust a gap between the inner circumferential surface of the insertion port for large diameter and the outer circumferential surface of the small diameter pipe. Here, the large diameter pipe is a pipe having a standard diameter that is connected to the joint main body and the small diameter pipe is a pipe having a smaller diameter than the large diameter pipe.

According to this configuration, in the case where a small diameter pipe is connected to a bite type pipe connection structure for connecting a large diameter pipe, the insertion port adjusting means allows a gap between the inner circumferential surface of the insertion port for large diameter and the outer circumferential surface of the small diameter pipe to be bridged and adjusted. Consequently, the small diameter pipe can be connected with the joint main body being attached to an apparatus.

In the bite type pipe connection structure, it is preferable that the ferrule for large diameter be formed integrally with the coupling member for large diameter, and be separated from the coupling member for large diameter when the coupling member for large diameter is fastened to the joint main body. According to this configuration, the ferrule for large diameter is formed integrally with the coupling member for large diameter. This prevents the ferrule for large diameter from being lost before the pipe is connected, and also simplifies the piping work.

In the bite type pipe connection structure, it is preferable that the ferrule for large diameter be formed separately from the coupling member for large diameter, and be an independent ferrule formed of one or more members. In this case, the ferrule for large diameter is formed separately from the coupling member for large diameter. This makes it easy to reuse the coupling member for large diameter in the case where a large diameter pipe is reconnected or a small diameter pipe is connected. The independent ferrule for large diameter may be a single ferrule or may be formed of two or more members.

In the bite type pipe connection structure, it is preferable that the ferrule for large diameter be an independent ferrule formed separately from the coupling member for large diameter and formed of a single member, and be temporarily held to the coupling member for large diameter at the rear end of the ferrule for large diameter before a coupling member for small diameter is fastened to the joint main body. As with the case where the ferrule for large diameter is formed integrally with the coupling member for large diameter, this structure prevents the ferrule for large diameter from being lost before pipe connection, and also simplifies the piping work. When the large diameter pipe is reconnected or a small diameter pipe is connected, the coupling member for large diameter can be reused easily by detaching the ferrule for large diameter from the coupling member for large diameter.

The bite type pipe connection structure preferably comprises a step portion for small diameter that is used to connect the small diameter pipe to the joint main body, the step portion for small diameter regulating the position of a tip of the small diameter pipe. This structure allows biting into the pipe with the small diameter pipe being secured, ensuring the connection of the small diameter pipe.

The bite type pipe connection structure preferably comprises insertion-through hole adjusting means, which is used to connect the small diameter pipe to the joint main body and adjusts a difference in dimension between an inner diameter of the insertion-through hole for large diameter of the ferrule for large diameter and an outer diameter of the small diameter pipe. This configuration bridges and adjusts a gap between the inner circumferential surface of the through hole for large diameter of the ferrule for large diameter and the outer circumferential surface of the small diameter pipe. In this state, this allows biting into the pipe being secured, ensuring the connection of the small diameter pipe.

In the bite type pipe connection structure, it is preferable that the insertion port adjusting means be a spacer having a substantially cylindrical shape with an outer diameter substantially equal to the inner diameter of the insertion port for large diameter, an inner diameter substantially equal to the outer diameter of the small diameter pipe, and an axial length substantially equal to the length of the insertion port for large diameter, the spacer being inserted in the insertion port for large diameter with its edge closer to the coupling member aligned with an edge of the cam surface located opposite to the coupling member. Since this configuration bridges the gap between the inner circumferential surface of the insertion port for large diameter and the outer circumferential surface of the small diameter pipe, the axis of the small diameter pipe can be prevented from becoming offset. In addition, the end surface of the spacer closer to the coupling member is arranged so as to be aligned with the edge of the cam surface located opposite to the coupling member. Therefore, the tip of the ferrule for small diameter can be smoothly guided toward the pipe when the small diameter pipe is connected.

In the bite type pipe connection structure, it is preferable that an end surface of the spacer closer to the coupling member be inclined at the same angle with the inner circumferential surface of the cam surface closer to the axis. This configuration allows the tip of the ferrule for small diameter to bite into the pipe more smoothly when the small diameter pipe is connected.

In the bite type pipe connection structure, it is preferable that the insertion port adjusting means have an outer diameter substantially equal to the inner diameter of the insertion port for large diameter, an inner diameter substantially equal to the outer diameter of the small diameter pipe, a cylindrical portion that is inserted into the insertion port for large diameter, and a tapered portion comprising a wall portion facing the cam surface and having a tapered shape, the tapered portion being formed integrally with the cylindrical portion, wherein the outer circumferential surface of the tapered portion is formed substantially equal to the tapered surface of the ferrule for large diameter and the inner circumferential surface of the tapered portion is formed substantially equal to the cam surface formed for the small diameter pipe. Generally, in the case where pipes having nominal diameters in millimeter size are connected to a bite type pipe connection structure for pipes having nominal diameters by inch size, the difference between the pipe diameters is not so large. Therefore, since the cylindrical spacer is thin, there is a problem such that the spacer is prone to deformation. With respect to this point, the tapering piece of the present invention advantageously has a sufficient strength and resistance to deformation. It also allows the ferrule for small diameter to be deformed to a desired shape by the same advantage as the cam surface formed for the small diameter pipe.

In the bite type pipe connection structure, it is preferable that the step portion for small diameter be a step portion formed integrally on the inner circumferential surface of the spacer at an end portion opposite to the coupling member. This structure facilitates formation of the step portion for small diameter. In addition, the small diameter pipe can be connected without forming a step portion for small diameter on the joint main body. Further, two or more kinds of pipes having different diameters can also be connected by changing the thickness of the spacer and the step portion.

In the bite type pipe connection structure, it is preferable that a difference in level of the step portion for large diameter be formed to have the same dimension as the thickness of the cylindrical portion of the spacer, an insertion port for small diameter in which the tip of the small diameter pipe is inserted is formed on the step portion for large diameter, and the step portion for small diameter is formed at a deep end of the insertion port for small diameter. According to this configuration, the insertion port adjusting means and the step portion for small diameter are formed on the joint main body. Therefore, the joint main body can be formed so as to be used for both a large diameter pipe and a small diameter pipe.

In the bite type pipe connection structure, it is preferable that the insertion-through hole adjusting means be a ferrule for small diameter having an insertion-through hole for small diameter in which the small diameter pipe is inserted, the ferrule for small diameter being used in place of the ferrule for large diameter. According to this configuration, the diameter of the insertion-through hole of the ferrule can be selected in accordance with the small diameter pipe. Therefore, biting of the ferrule to the pipe can be performed with both the insertion port adjusting means and the step portion for small diameter described above.

The bite type pipe connection structure preferably comprises a coupling member for small diameter that is used in place of the coupling member for large diameter, the coupling member for small diameter having a through hole for small diameter through which the small diameter pipe is passed. According to this configuration, the coupling member for small diameter has a pressing surface that is the most suitable for pressing the ferrule for small diameter, ensuring that the ferrule for small diameter can bite into the pipe more reliably. In addition, since the gap is hidden between the inner circumferential surface of the through hole of the coupling member and the outer circumferential surface of the small diameter pipe, the appearance is improved.

In the bite type pipe connection structure, it is preferable that the ferrule for small diameter be formed integrally with the coupling member for small diameter, and is separated from the coupling member for small diameter when the coupling member for small diameter is fastened to the joint main body. According to this configuration, since the ferrule for small diameter is formed integrally with the coupling member for small diameter, the ferrule for small diameter is prevented from being lost before pipe connection. In addition, the man-hour for pipe connection is reduced and the man-hour for parts control is simplified.

In the bite type pipe connection structure, it is preferable that the ferrule for small diameter be formed separately from the coupling member for large diameter or the coupling member for small diameter, and be an independent ferrule formed of one or more members. In this case, since the ferrule for small diameter is formed separately from the coupling member for large diameter or the coupling member for small diameter, the reuse of the coupling member for small diameter is easy when the small diameter pipe is reconnected. Also, when the small diameter pipe is connected using the coupling member for large diameter, the reuse of the coupling member for large diameter is easy. The independent ferrule for small diameter may be a single ferrule or may be formed of two or more members.

In the bite type pipe connection structure, it is preferable that the ferrule for small diameter be an independent ferrule formed separately from the coupling member for small diameter and formed of a single member, and be temporarily held to the coupling member for small diameter at a rear end of the ferrule for small diameter before the coupling member for small diameter is fastened to the joint main body. This configuration allows the ferrule for small diameter to be temporarily held to the coupling member for small diameter before the small diameter pipe is connected. Therefore, as with the case where the ferrule for small diameter is formed integrally with the coupling member for small diameter, this structure prevents the ferrule for small diameter from being lost before pipe connection, and also simplifies the pipe connection work. In the case where the small diameter pipe is reconnected, the coupling member for small diameter can be reused easily by detaching the ferrule for small diameter from the coupling member for small diameter.

In the bite type pipe connection structure, it is preferable that the insertion-through hole adjusting means be a spacer having a substantially cylindrical shape with an outer diameter substantially equal to the inner diameter of the insertion port for large diameter and an inner diameter substantially equal to the outer diameter of the small diameter pipe, the spacer being inserted into the insertion-through hole for large diameter from the insertion port for large diameter, and that the insertion-through hole adjusting means be also used as the insertion port adjusting means. In this case, the ferrule for large diameter bites into the pipe with the spacer. In addition, the spacer serving as insertion port adjusting means and the spacer serving as insertion-through hole adjusting means are formed as one part. As a result, the man-hour for building in parts at pipe connection is reduced and the man-hour for parts control is reduced. Furthermore, the insertion-through hole adjusting means has a substantival cylindrical shape, and thus its structure is simplified.

In the bite type pipe connection structure, it is preferable that: the insertion-through hole adjusting means be a ferrule for small diameter having an insertion-through hole for small diameter in which the small diameter pipe is inserted, the ferrule for small diameter being used in place of the ferrule for large diameter; and a spacer serving as the insertion port adjusting means be formed integrally at the tip of the ferrule for small diameter, and the spacer have a substantially cylindrical shape with an outer diameter substantially equal to the inner diameter of the insertion port for large diameter and an inner diameter substantially equal to the outer diameter of the small diameter pipe, be formed insertably to the insertion port for large diameter, and be separated from the ferrule for small diameter before the ferrule for small diameter bites into the small diameter pipe during the process of fastening the coupling member to the joint main body. According to this configuration, the coupling member for small diameter, the ferrule for small diameter serving as the insertion-through hole adjusting means and the spacer serving as the insertion port adjusting means are integrally formed. Therefore, the man-hour for building in parts at pipe connection is reduced and the man-hour for parts control is also reduced.

In the bite type pipe connection structure, it is preferable that the step portion for small diameter be a step portion formed integrally on the inner circumferential surface of the spacer at an end portion opposite to the coupling member. This structure facilitates formation of the step portion for small diameter. By addition of this spacer, the joint main body, the ferrule for large diameter and the coupling member for large diameter are used as they are without change to connect the small diameter.

In the bite type pipe connection structure, it is preferable that a difference in level of the step portion for large diameter be formed to have the same dimension as the thickness of the cylindrical portion of the spacer, an insertion port for small diameter in which the tip of the small diameter pipe is inserted be formed on the step portion and, the step portion for small diameter be formed at a deep end of the insertion port for small diameter. According to this configuration, the insertion port adjusting means and the step portion for small diameter are formed on the joint main body. This allows the joint main body to be formed so as to be used for both a large diameter pipe and a small diameter pipe. Therefore, the small diameter pipe can be connected without forming a step portion for small diameter on the spacer.

In the bite type pipe connection structure, it is preferable that the insertion port adjusting means have an outer diameter substantially equal to the inner diameter of the insertion port for large diameter, an inner diameter substantially equal to the outer diameter of the small diameter pipe, a cylindrical portion that is inserted in the insertion port for large diameter, and a tapered portion that is formed of a wall portion facing the cam surface and having a tapered shape, the tapered portion being formed integrally with the cylindrical portion, wherein the outer circumferential surface of the tapered portion is in line contact with the cam surface, and the inner circumferential surface of the tapered portion is formed substantially equal to the cam surface for the small diameter pipe, the insertion-through hole adjusting means is a ferrule for small diameter having an insertion-through hole for small diameter in which the small diameter pipe is inserted, the ferrule for small diameter being used in place of the ferrule for large diameter. The bite type pipe connection structure preferably further comprises a coupling member for small diameter, which is used in place of the coupling member for large diameter and has a through hole for small diameter through which the small diameter pipe is passed. By making the tapering piece thick, this structure can also be applied to a case where the diameter of the large diameter pipe and the diameter of the small diameter pipe are largely different, for example, a case where the pipe diameter is reduced by one class or more compared to the large diameter pipe. In this case, however, the tapered portion is less likely to deform when the coupling member is fastened. This makes it difficult to bring the outer circumferential surface of the tapered portion into contact with the cam surface of the joint main body, causing a difficulty in sealing the tapered portion and the cam surface. In this regard, according to the present invention, the outer circumferential surface of the tapered portion is brought into line contact with the cam surface of the joint main body, thereby sealing the outer circumferential surface of the tapered portion and the cam surface of the joint main body. Also, the inner circumferential surface of the tapered portion is formed substantially equal to the cam surface that is formed for the small diameter pipe, thereby sealing the ferrule for small diameter and the tapering pieces.

In the bite type pipe connection structure, it is preferable that the step portion for small diameter be a step portion formed integrally on the inner circumferential surface of the cylindrical portion at an end opposite to the coupling member. This configuration facilitates formation of the step portion for small diameter. In addition, the small diameter pipe can be connected without forming a step portion for small diameter on the joint main body.

In the bite type pipe connection structure, it is preferable that the ferrule for small diameter be formed integrally with the coupling member for small diameter, and be separated from the coupling member for small diameter when the coupling member for small diameter is fastened to the joint main body. According to this configuration, the ferrule for small diameter is formed integrally with the coupling member. This prevents the ferrule for small diameter from being lost or from being damaged before pipe connection. In addition, the pipe connection work is simplified.

In the bite type pipe connection structure, it is preferable that the ferrule for small diameter be formed separately from the coupling member for small diameter, and be an independent ferrule formed of one or more members. This structure facilitates the reuse of the coupling member for small diameter when the pipe is reconnected. The independent ferrule may be a single ferrule or may be formed of two or more members.

In the bite type pipe connection structure, it is preferable that the ferrule for small diameter be an independent ferrule formed separately from the coupling member for small diameter and formed of a single member, and be temporarily held to the coupling member for small diameter at the rear end of the ferrule for small diameter before the coupling member for small diameter is fastened to the joint main body. As with the case where the ferrule for small diameter is formed integrally with the coupling member for small diameter, this structure prevents the ferrule for small diameter from being lost before pipe connection and simplifies the pipe connection work. In addition, in the case where the small diameter pipe is reconnected, the coupling member for small diameter can be reused easily by detaching the ferrule for small diameter from the coupling member for small diameter.

In the valve and the bite type pipe joint according to the present invention, the bite type pipe connection structure is used in the pipe joint portion. Therefore, such a valve and a bite type pipe joint can be used for connection of pipes that are different from pipes set as a standard specification. That is, the valve and the bite type pipe joint according to the present invention can be used for connection of pipes having different diameters due to difference in piping systems or piping size.

In the freezing device according to the present invention, the above-described valve or bite type pipe joint is used in a refrigerant circuit. Therefore, in the freezing device according to the present invention, commonality of products is realized since pipes having different diameters can be connected.

### BRIEF DESCRIPTION OF THE DRAWING

Fig. 1 is a partial cross-sectional view of a bite type pipe joint according to a first embodiment of the present invention used for connecting a large diameter pipe, showing a state in which fastening has started;
Figs. 2 are cross-sectional views of the fastening processes when the large diameter pipe is connected, in which (a) is a cross-sectional view showing a state in which fastening has started, (b) is a cross-sectional view showing a state in which a thin portion has been cut, and (c) is a cross-sectional view showing a state in which an edge portion has bitten into the pipe;
Fin. 3 is a partial cross-sectional view of the bite type pipe joint used when a large diameter pipe is connected, showing a state immediately before fastening is completed;
Fig. 4 is a partial cross-sectional view of the bite type pipe joint used when a large diameter pipe is connected, showing a state in which fastening is completed;
Fig. 5 is a perspective view showing a special tool for the bite type pipe joint;
Fig. 6 is a partial cross-sectional view of the bite type pipe joint used when a small diameter pipe is connected, showing a state in which fastening has started;
Fig. 7 is a partial cross-sectional view of a spacer used when a small diameter pipe is connected using the bite type pipe joint;
Fig. 8 is a partial cross-sectional view of a bite type pipe joint according to a second embodiment of the present invention used when a small diameter pipe is connected, showing a state in which fastening has started;
Fig. 9 is a partial cross-sectional view of a ferrule used when a small diameter pipe is connected using the bite type pipe joint;
Fig. 10 is a partial cross-sectional view of a bite type pipe joint according to a third embodiment of the present invention used when a small diameter pipe is connected, showing a state in which fastening has started;
Fig. 11 is a partial view of the bite type pipe joint used when a small diameter pipe is connected, showing a state in which the front edge portion of the ferrule has bitten into the pipe;
Fig. 12 is a partial cross-sectional view of a bite type pipe joint according to a fourth embodiment of the present invention used when a small diameter pipe is connected, showing a state in which fastening has started;
Fig. 13 is a partial cross-sectional view of a bite type pipe joint according to a fifth embodiment of the present invention used when a large diameter pipe is connected, showing a state in which fastening has started;
Fig. 14 is a partial cross-sectional view of the bite type pipe joint used when a small diameter pipe is connected, showing a state in which fastening has started;
Fig. 15 is a partial cross-sectional view of a spacer used when a small diameter pipe is connected using the bite type pipe joint;
Fig. 16 is a partial cross-sectional view of a coupling member used when a small diameter pipe is connected using a bite type pipe joint according to a sixth embodiment of the present invention;
Fig. 17 is a partial cross-sectional view of the bite type pipe joint used when a small diameter pipe is connected, showing a state in which fastening has started;
Fig. 18 is an enlarged partial cross-sectional view of a cam surface and its surrounding, when a small diameter pipe is connected using a bite type pipe joint according to a seventh embodiment of the present invention;
Fig. 19 is a partial cross-sectional view of a tapering piece used when a small diameter pipe is connected using the bite type pipe joint;
Fig. 20 is a partial cross-sectional view of a bite type pipe joint according to an eighth embodiment of the present invention used when a small diameter pipe is connected, showing a state in which fastening has started;
Fig. 21 is a cross-sectional view of a tapering piece used when a small diameter pipe is connected using the bite type pipe joint;
Fig. 22 is a partial cross-sectional view of a bite type pipe joint according to a ninth embodiment of the present invention used when a small diameter pipe is connected, showing a state in which fastening has started;
Fig. 23 is a cross-sectional view showing a state in which a ferrule in the bite type pipe joint has been temporarily assembled in the coupling member; and
Fig. 24 is a partial cross-sectional view of the bite type pipe joint according to the ninth embodiment of the present invention used when a small diameter pipe is connected, showing a state in which fastening is completed.

### BEST MODE FOR CARRYING OUT THE INVENTION

### (First embodiment)

### [Pipe connection structure for a large diameter pipe]

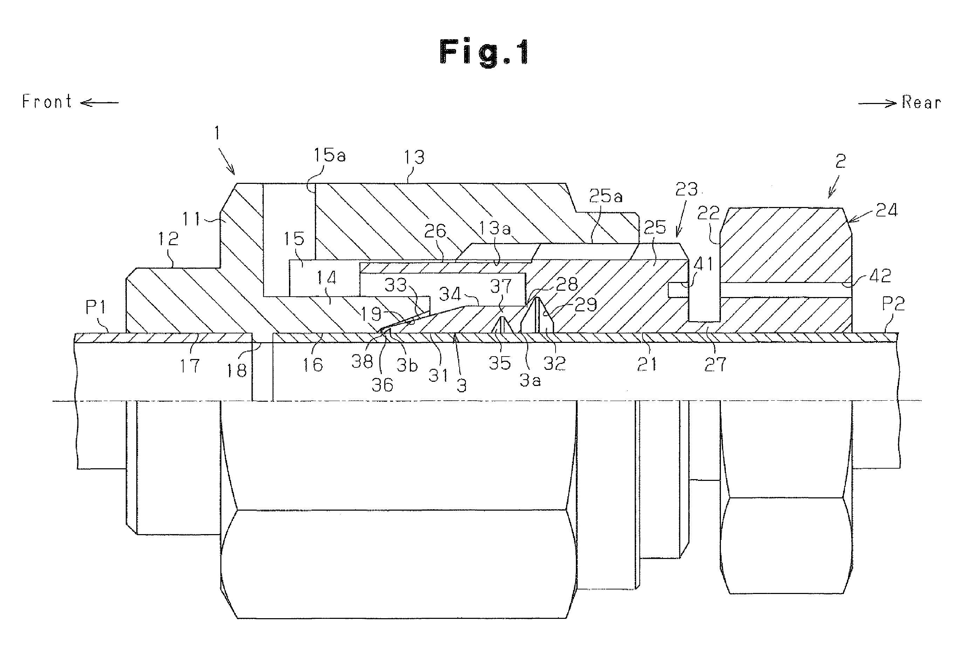

A bite type pipe connection structure according to a first embodiment of the present invention will be described with reference to the attached drawings. The bite type pipe connection structure is intended to connect a small diameter pipe to a pipe having a diameter previously set as a standard specification (hereinafter referred to as the large diameter pipe). The small diameter pipe has a smaller diameter than the large diameter pipe. The bite type pipe connection structure is based on a structure for connection of a large diameter pipe as a standard specification. Therefore, first, the basic configuration of the bite type pipe connection structure will be described with reference to Figs. 1 to 5. Then, description will be given of the bite type pipe connection structure for connection of a pipe having a smaller diameter than a predetermined diameter (hereinafter referred to as the small diameter pipe).

The bite type pipe connection structure according to the first embodiment is applied to a pipe joint portion of a closing valve for connecting a pipe to an outside unit of a separate type air conditioner as well as a bite type pipe joint in a refrigerant circuit in the field of freezing devices such as an air conditioner.

As shown in Fig. 1, the bite type pipe joint is formed of a joint main body 1, a coupling member for large diameter 2, and a ferrule for large diameter 3. The joint main body 1 is attached to a pipe P1 that is led out from an apparatus to be connected to the pipe. The coupling member for large diameter 2 is joined to the joint main body 1 while being externally arranged around a large diameter pipe P2 to be connected to the bite type pipe joint. The ferrule for large diameter 3 is formed integrally with the coupling member 2. In this description, a large diameter pipe is referred to as the pipe P2, a coupling member for large diameter as the coupling member 2, and a ferrule for large diameter as the ferrule 3. In addition, in this description, the side corresponding to the joint main body 1 (the left side in Fig. 1) is referred to as the front side and the side corresponding to the coupling member 2 (the right side in Fig. 1) is referred to as the rear side.

The joint main body 1 includes a base portion 11, a socket portion 12, and an internal thread cylindrical portion 13. The socket portion 12 is provided at a front end surface of the base portion 11 (an end opposite to the coupling member 2). The internal thread cylindrical portion 13 extends from the outer circumferential portion of the base portion 11 toward the rear. The joint main body 1, furthermore, has a shaft portion 14 that projects from the axis of the base portion 11 toward the rear in the internal thread cylindrical portion 13. In the internal thread cylindrical portion 13, an internal thread 13a into which the coupling member 2 is screwed is formed. A space portion 15 having an annular shape is formed between the outer circumferential surface of the shaft portion 14 and the internal thread cylindrical portion 13. In the space portion 15, a protective cylindrical portion 26 of the coupling member 2 is accommodated when connecting pipes. The outer shape of the base portion 11 and the internal thread cylindrical portion 13 are formed to have a hexagonal nut shape. On the shaft portion 14, an insertion port for large diameter 16 (hereinafter, referred to as the insertion port 16) extending from the base portion 11 toward the rear along the axis is formed. Into the insertion port 16, the pipe P2 is inserted. On the socket portion 12, an insertion port 17 extending from the base portion 11 toward the front along the axis is formed. Into the insertion port 17, the pipe P1 is inserted. Furthermore, at the deepest portion of the insertion port 16, a step portion for large diameter 18 (hereinafter, referred to as the step portion 18) is formed. The step portion 18 regulates the position of the tip of the pipe P2. The step portion 18 is formed between the insertion port 16 and the insertion port 17. On the axis of the step portion 18, a communicating hole having a smaller diameter than the insertion port 16 and the insertion port 17 is formed. Therefore, at the step portion 18, the surface difference in level on the front side regulates the position of the tip of the pipe P1. At the deepest portion of the space portion 15, a hole extending in the radial direction is formed so as to connect the space portion 15 and the outside to each other. This hole serves as a relief hole 15a for dissipating the expansion force to the outside when water in the air freezes and expands in the bite type pipe joint. In this embodiment, the diameter of the pipe P1 and that of the pipe P2 are the same.

At the tip of the shaft portion 14, that is, in the vicinity of the entrance of the insertion port 16, a cam surface 19 is formed. The front portion of the cam surface 19 is continuous to the insertion port 16. The cam surface 19 is formed to have a conical shape, and the diameter of the cam surface 19 increases toward the rear. The inclination angle of the cam surface 19 relative to the axis is greater around the axis than in the vicinity of the outer circumferential end.

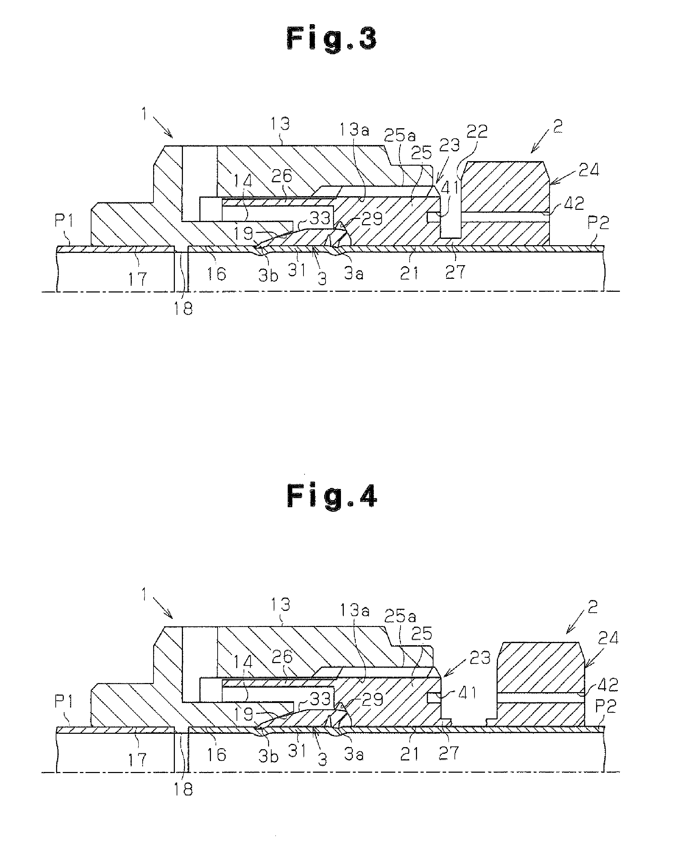

The coupling member 2 has a through hole for large diameter 21 (hereinafter, referred to as the through hole 21) through which the pipe P2 is passed. The through hole 21 is provided coaxially with the coupling member 2. On the coupling member 2, a disc-like slit 22 formed of cuts extending in the radial direction is formed. Forward of the slit 22, a pipe connection portion 23 that is screwed into the joint main body 1 is formed. The pipe connection portion 23 includes components of a pipe connection mechanism. At the rear end of the coupling member 2, a holding portion 24 that can be grasped with a fastening tool is formed. The outer shape of the holding portion 24 is formed to have a hexagonal nut shape so that it can be grasped with a fastening tool. As shown in Fig. 3, in the state where the coupling member 2 is fastened to the joint main body 1, the position of the slit 22 is substantially aligned with the position of the rear end of the joint main body 1.

The pipe connection portion 23 has a base portion 25. At the front end of the base portion 25, the protective cylindrical portion 26 that protects the outer circumferential surface of the ferrule 3 is formed. On the outer circumferential surface of the base portion 25, an external thread 25a that is screwed into the joint main body 1 is formed. Between the slit 22 and the inner circumferential surface of the through hole 21, a joining portion 27 formed by a thin tubular portion is formed. The joining portion 27 joins the pipe connection portion 23 to the holding portion 24. The joining portion 27 is cut when the fastening torque of the holding portion 24 exceeds a predetermined value.

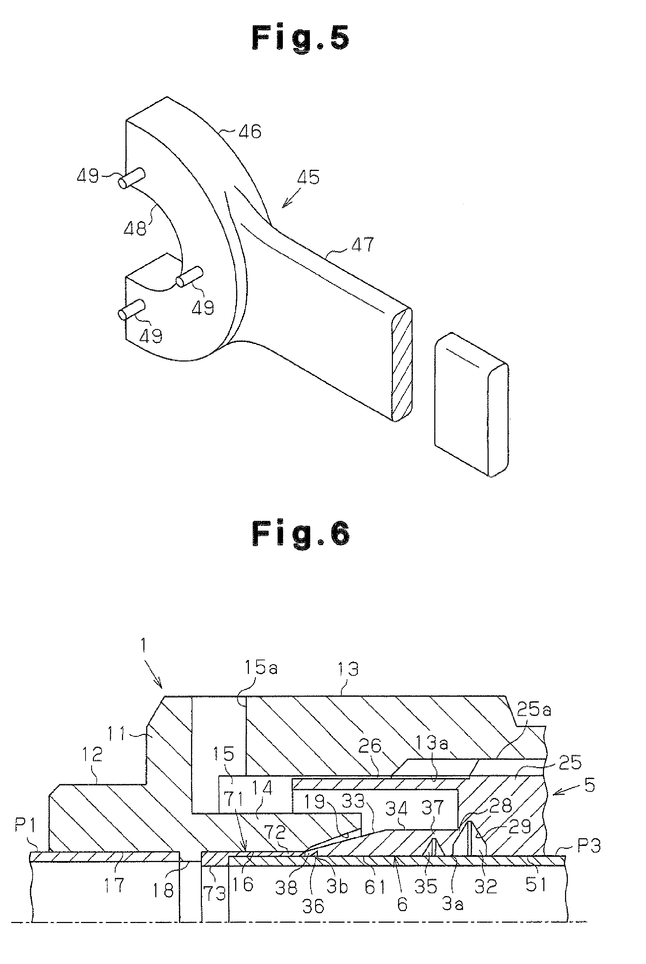

On the rear end surface of the pipe connection portion 23, four engaging recesses 41 that are engaged with engaging projections 49 of a special tool 45 shown in Fig. 5 are formed. The engaging recesses 41 are circular in cross section and have a predetermined depth. The engaging recesses 41 are spaced evenly on a predetermined circumference. On the holding portion 24, four processing holes 42 are formed at each position corresponding to the engaging recesses 41. The processing holes 42 are spaced evenly on a predetermined circumference. The processing holes 42 are provided for processing the engaging recesses 41 from the rear end surface of the holding portion 24.

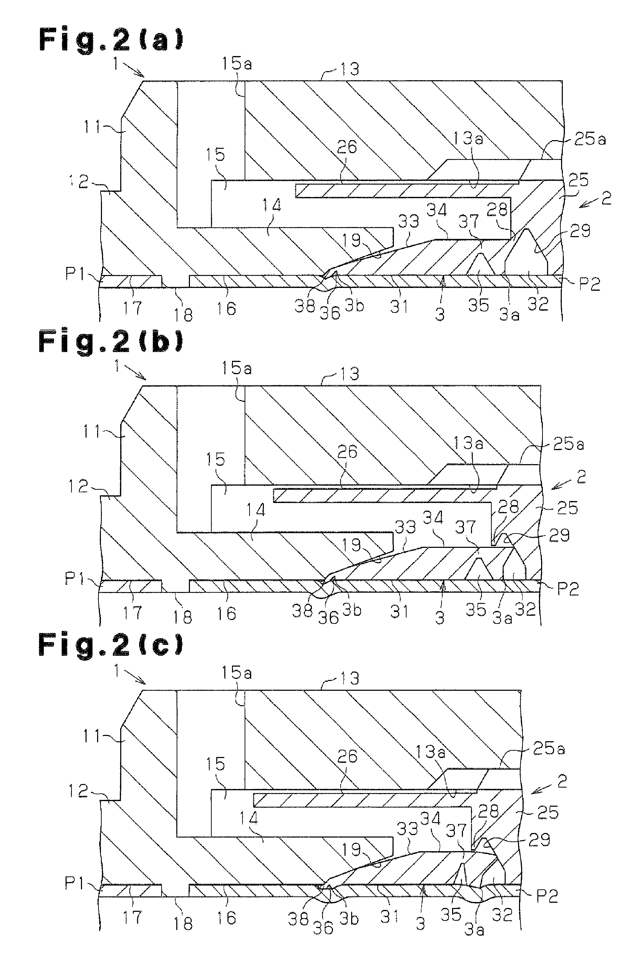

The ferrule 3 has an insertion-through hole for large diameter 31 (hereinafter, referred to as the insertion-through hole 31) in which the pipe P2 is inserted. The insertion-through hole 31 is provided coaxially with the ferrule 3. The ferrule 3 is formed into an annular shape. At the rear end of the ferrule 3, a thin portion 28 extending in the radial direction is formed. The ferrule 3 is connected to the base portion 25 with the thin portion 28 and is formed integrally with the coupling member 2. The thin portion 28 is cut when the fastening torque of the coupling member 2 to the joint main body 1 exceeds a predetermined value (see Fig. 2(b)). Between the rear end surface of the ferrule 3 and the base portion 25, a space portion 32 is formed. The cross section in the axial direction of the space portion 32 has a pair of plane surfaces that extend in the direction perpendicular to the axis and are spaced in parallel with each other and a circumferential surface that tapers toward the outer circumference and is substantially triangle in cross section. At the top of the circumferential surface that is substantially triangle in cross section, a short side that extends along the axis is formed. The front surface of the space portion 32 is the rear end surface of the ferrule 3, and the rear surface of the space portion 32 is the front end surface of the base portion 25. The inclined surface on the rear side in the circumferential surface that is substantially triangle in cross section forms a pressing surface 29 of the ferrule 3. The corner portion close to the axis in the rear end surface of the ferrule 3 forms the rear edge portion 3a.

Seen from the cross section in the axial direction, the ferrule 3 has a cylindrical parallel surface 34 that extends along the axis from the rear end of the ferrule 3 to its center, a tapered surface 33 that is tapers from the center toward the front end and a front end surface that extends along the direction perpendicular to the axis.

Seen from the cross section in the axial direction, the parallel surface 34 of the ferrule 3 and the front surface of the thin portion 28 form a substantially right angle. This right-angle corner portion is formed with an incision made in the inclined front surface of the space portion 32 from the opposite side. This incision facilitates the stress concentration on the thin portion 28 when an axial force acts on the coupling member 2.

On the ferrule 3, first and second notches 35, 36 are formed. Each notch 35, 36 is formed with an incision made from the inner circumferential surface to the outer circumferential surface of the insertion-through hole 31. The first notch 35 is formed in the vicinity of the rear end of the ferrule 3, and the second notch 36 is formed in the vicinity of the tip of the ferrule 3.

The cross section of the first notch 35 has a substantially triangular shape having a short side on its outer circumference. The first notch 35 has the same shape as the apical portion of the space portion 32. In other words, the space portion 32 is a space surrounded by the outer circumferential surface that has the same substantially triangular cross section as the first notch 35 and a pair of plane surfaces extending in the direction perpendicular to the axis from both lower ends of the first notch 35. Between the apical portion of the first notch 35 and the parallel surface 34 of the ferrule 3, an annularly extending thin portion 37 is formed. Around the thin portion 37, the ferrule 3 is easily bent toward the axis both at its front portion and its rear portion. As a result, a rear edge portion 3a of the ferrule 3 bites into the pipe P2, and a tapered surface 33 of the ferrule 3 is brought into close contact with the cam surface 19 of the joint main body 1. The rear edge portion 3a of the ferrule 3 holds the pipe P2 to prevent the pipe P2 from coming off and vibration of the pipe P2 from being transmitted to the front edge portion 3b. That is, the rear edge portion 3a maintains the sealing performance and pipe retaining performance by biting in of the front edge portion 3b (see Fig. 2(c)).

The second notch 36 facilitates deformation of the tip 38 of the ferrule 3. The cross section of the second notch 36 in the axis direction has a right triangle shape. The rear surface of the second notch 36 extends in the direction perpendicular to the axis. Therefore, at the step when the coupling member 2 is turned manually for fastening, the tip 38 of the ferrule 3 is inserted, in a wedge-like manner, between the outer circumferential surface of the pipe P2 and the inner circumferential surface of the insertion port 16 to temporarily hold the pipe P2 (see Fig. 2(a)). The crossing portion of the rear surface of the second notch 36 and the inner circumferential surface of the insertion-through hole 31 forms the front edge portion 3b. The front edge portion 3b allows the front edge of the ferrule 3 to bite into the pipe P2 (see Fig. 2(c)). Accordingly, the front edge portion 3b allows the ferrule 3 and the pipe P2 to be sealed. Since the front edge portion 3b bites into the pipe P2, the tapered surface 33 of the ferrule 3 is brought into more close contact with the cam surface 19. Consequently, the cam surface 19 and the tapered surface 33 are sealed.

The pipe joint portion of the bite type pipe joint is a component intended for connection of the pipe P2 by fastening the coupling member 2 to the joint main body 1 while pressing the ferrule 3 against the cam surface 19 of the joint main body 1. The bite type pipe connection structure according to the present invention is characterized by the structure of the pipe joint portion. The bite type pipe connection structure for connection of a small diameter pipe that will be described later also has the above characteristic structure of the pipe joint portion and is included in the bite type pipe connection structure of the present invention.

The pipes P1, P2 are made of copper. The joint main body 1, the coupling member 2 and the ferrule 3 are made of brass materials. These materials are most suitable for freezing devices and have general versatility.

Next, a method for connecting pipes of the bite type pipe connection structure will be described with reference to Figs. 1 to 4.

Before connecting the pipe P2 to the joint main body 1, the joint main body 1 is attached to the pipe P1 of an apparatus. Then, the pipe P2 is inserted into the through hole 21 of the coupling member 2 to externally arrange the coupling member 2 around the pipe P2. Subsequently, the tip of the pipe P2 is passed through the insertion-through hole 31 of the ferrule 3 and inserted into the insertion port 16 of the joint main body 1. With the tip of the pipe P2 contacting the rear surface difference in level of the step portion 18 of the joint main body 1, the coupling member 2 is screwed into the joint main body 1. This state is shown in Fig. 1.

Next, from the state shown in Fig. 1, the coupling member 2 is turned manually and fastened, so that the tip 38 of the ferrule 3 contacts the cam surface 19 of the joint main body 1. From this state, the coupling member 2 is further fastened, so that the tip 38 of the ferrule 3 is pressed in between the outer circumferential surface of the pipe P2 and the inner circumferential surface of the insertion port 16 to temporarily fix the pipe P2. This state is shown in Fig. 2(a).

Thereafter, since the tapered surface 33 of the ferrule 3 also contacts the cam surface 19, the fastening torque of the coupling member 2 is increased. Therefore, in the subsequent processes, while grasping the holding portion 24 using a fastening tool, the coupling member 2 is fastened to the joint main body 1. This allows the coupling member 2 to be fastened to the joint main body 1 with the tip of the ferrule 3 pressed against the cam surface 19 of the joint main body 1, and a forward force in the axial direction acts on the thin portion 28. At this time, stress concentrates on the thin portion 28 of the ferrule 3 and the thin portion 28 is cut. Accordingly, the rear end surface of the ferrule 3 contacts the pressing surface 29 of the coupling member 2 (see Fig. 2(b)).

After the ferrule 3 is separated from the coupling member 2, the rear end surface of the ferrule 3 is pressed forward by the pressing surface 29 of the coupling member 2. This pressing surface 29 is increasingly inclined to approach the axis toward the rear end. Therefore, when the coupling member 2 is further fastened, the front portion and the rear portion of the ferrule 3 are both easily bent toward the axis about the thin portion 37.

As a result, the front portion and the rear portion of the ferrule 3 both bite into the pipe P2, and the rear edge portion 3a and the front edge portion 3b of the ferrule 3 both bite into the pipe P2. As shown in Fig. 2(c), when the bite amounts of the rear edge portion 3a and the front edge portion 3b reach predetermined levels, the end portion of the internal thread cylindrical portion 13 of the joint main body 1 and the front surface of the slit 22 are located so that they are substantially aligned with each other as shown in Fig. 3. In this state, when the rotation torque reaches a predetermined level, the joining portion 27 is cut and the holding portion 24 is separated from the coupling member 2 as shown in Fig. 4. Thus, when fastening process of the coupling member 2 is done and the pipe connection work is completed, the holding portion 24 is cut. After the coupling member 2 is fastened, the pipe P2 cannot be easily removed just by loosening the pipe connection portion 23. However, when reconnection of the pipe is needed, the pipe can be removed from the pipe connection portion 23 by using a special tool.

As shown in Fig. 5, the special tool 45 has a half-disc shaped base body 46 and a handle portion 47 extending from the base body 46. On the base body 46, a semicircular hole 48 is formed. On the lateral side of the base body 46, three cylindrical engaging projections 49 that can be engaged with the engaging recesses 41 on the pipe connection portion 23 are provided. The inner diameter of the hole 48 is slightly larger than the outer diameter of the joining portion 27. The engaging projections 49 are engaged with three adjacent engaging recesses among four engaging recesses 41 provided on the pipe connection portion 23.

When the pipe P2 is removed, the engaging projections 49 of the special tool 45 are engaged with three engaging recesses 41 of the pipe connection portion 23. Then, using the special tool 45, the pipe connection portion 23 is turned to unscrew the joint main body 1. When the pipe connection portion 23 and the joint main body 1 are unscrewed, the pipe P2 connected to the bite type pipe joint can be removed from the joint main body 1. After the pipe P2, together with the pipe connection portion 23, is removed, another pipe P2, together with a new coupling member 2, can be connected to the joint main body 1.

### [Pipe connection structure for a small diameter pipe]

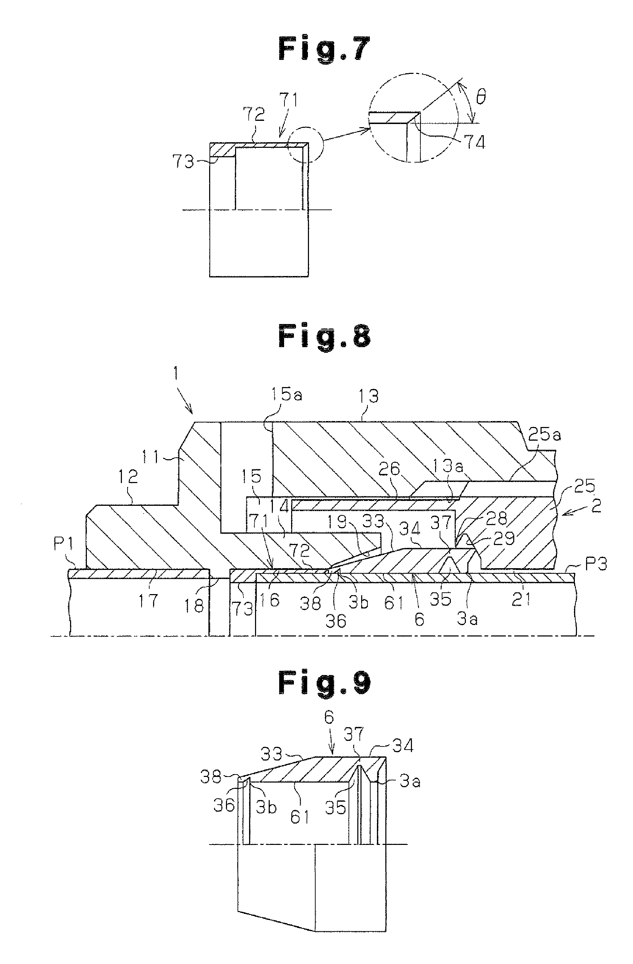

Next, a bite type pipe connection structure when a small diameter pipe is connected will be described with reference to Figs. 6 and 7, focusing on the differences from the above mentioned basic configuration. The same structure as that of the first embodiment or components about that there is no special need to explain are designated by the same reference numerals and their descriptions will be omitted.

The small diameter pipe connection structure according to this embodiment is designed to connect a pipe having a smaller diameter than a large diameter pipe due to a difference in piping systems. For example, while the pipe P2 according to the basic configuration has a nominal diameter of 4/8 inch (outer diameter of 12.7 mm), this structure is designed to connect a pipe having a nominal diameter of 12.0 mm.

As shown in Figs. 6 and 7, in the pipe connection structure for a small diameter pipe, a coupling member for small diameter 5 (hereinafter, referred to as the coupling member 5) formed integrally with a ferrule for small diameter 6 (hereinafter, referred to as the ferrule 6) is screwed into the joint main body 1 having the above mentioned basic configuration. On the coupling member 5, a holding portion 24 (not shown) is formed as is the case with the coupling member 2. On the axis of the coupling member 5, a through hole for small diameter 51 through which a small diameter pipe P3 (hereinafter, referred to as the pipe P3) is passed is formed. The other configurations of the coupling member 5 are the same as those of the coupling member 2 for connection of a large diameter pipe, except that the dimensions are slightly different.

On the axis of the ferrule 6, an insertion-through hole for small diameter 61 (hereinafter, referred to as the insertion-through hole 61) through which the pipe P3 is passed is formed. The other configurations of the ferrule 6 are the same as those of the ferrule 3, except that the dimensions are slightly different. The ferrule 6 corresponds to the insertion-through hole adjusting means of the present invention.

When the coupling member 5 and the ferrule 6 are externally arranged around the pipe P3, and the pipe P3 is inserted into the insertion port 16 of the joint main body 1, a gap is created between the inner circumferential surface of the insertion port 16 and the outer circumferential surface of the pipe P3. A step portion may hinder the position of the tip of the pipe P3 from being sufficiently regulated. In this respect, in the pipe connection structure for a small diameter pipe, a spacer 71 is inserted into the insertion port 16 of the joint main body 1. The outer diameter of the spacer 71 is substantially equal to the inner diameter of the insertion port 16, and the inner diameter of the spacer 71 is substantially equal to the outer diameter of the pipe P3. The spacer 71 extends in the axial direction and has a cylindrical portion 72 that has a length substantially equal to the axial length of the insertion port 16. The cylindrical portion 72 is provided for bridging the gap between the outer circumferential surface of the pipe P3 and the inner circumferential surface of the insertion port 16, and forms the insertion port adjusting means of the present invention. At the front end portion of the inner circumferential surface of the spacer 71, a step portion 73 is formed. The step portion 73 has a thickness equivalent to the thickness of the pipe P3. The step portion 73 is provided for regulating the position of the tip of the pipe P3. Therefore, the step portion 73 forms the step portion for small diameter of the present invention. The rear end surface 74 of the spacer 71 is inclined at the same inclination angle θ as the inner circumferential surface of the cam surface 19 closer to the axis.

Next, a method for connecting the small diameter pipe P3 will be described.

First, in the bite type pipe connection structure for connection of a large diameter pipe as a standard specification, the coupling member 2, together with the ferrule 3, is removed from the joint main body 1 (see Fig. 1). Next, the spacer 71 is inserted into the insertion port 16 of the joint main body 1. Around the pipe P3, the coupling member 5 and the ferrule 6 are externally arranged. Then, the pipe P3 is inserted into the spacer 71 to bring the tip of the pipe P3 into contact with the surface difference in level of the step portion 73 of the spacer 71. In this state, the coupling member 5 is first turned manually and fastened to the joint main body 1. At this time, since the spacer 71 is located between the inner circumferential surface of the insertion port 16 and the outer circumferential surface of the pipe P3, the tip of the ferrule 6 is pressed against the cam surface 19 of the joint main body 1 and the rear end surface 74 of the spacer 71. At this step, the tip 38 of the ferrule 6 is inserted, in a wedge-like manner, between the pipe P3 and the spacer 71 to temporarily fix the pipe P3.

From this state, the thin portion 28 is cut and the ferrule 6 bites into the pipe P3 by grasping the holding portion 24 (see Fig. 1) with a tool and further fastening the coupling member 5. Consequently, the pipe P3 is held and sealed as is the case with connection of the large diameter pipe P2.

### [Advantages of the first embodiment]

According to the first embodiment, the following advantages are obtained:
(1) In the case where the small diameter pipe P3 is connected using the bite type pipe connection structure for connection of the large diameter pipe P2 as a standard specification, the gap between the inner circumferential surface of the insertion port 16 and the outer circumferential surface of the pipe P3 is bridged and adjusted by the spacer 71, and the position of the tip of the pipe P3 is regulated by the step portion 73. The gap between the insertion-through hole 61 of the ferrule 6 and the pipe P3 is also bridged and adjusted by the ferrule 6. Therefore, with the joint main body 1 attached to an apparatus, the small diameter pipe P3 can be connected to the joint main body 1.
(2) The insertion port adjusting means is formed by the substantially cylindrical shaped spacer 71. The spacer 71 has an outer diameter substantially equal to the inner diameter of the insertion port 16, an inner diameter substantially equal to the outer diameter of the pipe P3 and an axial length substantially equal to the length of the insertion port 16. Therefore, the gap between the inner circumferential surface of the insertion port 16 and the outer circumferential surface of the pipe P3 is bridged by the spacer 71. As a result, the axis of the pipe P3 is prevented from becoming offset.
(3) The dimension of the rear end surface of the spacer 71 is the same as that of the front end of the cam surface 19. Therefore, in the case where the pipe P3 is connected, the tip of the ferrule 6 is smoothly guided toward the pipe P3. Especially, the rear end surface 74 of the spacer 71 is inclined at the same inclination angle with the inner circumferential surface closer to the axis of the cam surface 19. Therefore, the tip of the ferrule for small diameter 6 can bite into the pipe P3 more smoothly.
(4) On the front end portion of the inner circumferential surface of the spacer 71, the step portion 73 is formed. This allows the small diameter pipe to be connected to the joint main body 1 without forming a step portion for small diameter on the joint main body 1. In addition, pipes having different diameters can be connected by changing the thickness of the spacer 71 and that of the step portion 73.
(5) The ferrule 6 having the insertion-through hole 61 through which the pipe P3 is inserted is used in place of the ferrule 3 used for connection of the pipe P2. Therefore, the diameter of the insertion-through hole of the ferrule can be selected according to the pipe P3. This allows the front edge portion 3b and the rear edge portion 3a of the ferrule 6 to bite into the pipe reliably. In the case where the pipe P3 is connected, the gap between the inner circumferential surface of the through hole 51 of the coupling member 5 and the pipe P3 is hidden. Therefore, the appearance is also improved.
(6) The ferrule 6 is formed integrally with the coupling member 5 and can be separated from the coupling member 5 when the coupling member 5 is fastened. This prevents the ferrule 6 from being lost or damaged before connection of the pipe. Also, the man-hour for pipe connection and parts control are reduced.
(7) By using the bite type pipe connection structure according to the first embodiment in a pipe joint portion of a valve or a bite type pipe joint, pipes having different diameters, in addition to a predetermined pipe as a standard specification, can be connected to the pipe joint portion. That is, it can be used to connect pipes having different diameters due to a difference in piping systems and a difference in piping sizes.
(8) According to a freezing device using such a valve or bite type pipe joint in a refrigerant circuit, pipes having different diameters can be connected, thereby providing an advantage in commonality of products.

### (Second embodiment)

Next, a second embodiment will be described with reference to Figs. 8 and 9. In the second embodiment, the bite type pipe connection structure for connecting a large diameter pipe is the same as the first embodiment, and the bite type pipe connection structure for connecting a small diameter pipe is different from the first embodiment. As shown in Fig. 8, in the second embodiment, the ferrule 6 in the first embodiment is changed to an independent ferrule, and the coupling member 5 is changed to a coupling member for large diameter 2.

As shown in Fig. 9, the ferrule 6 in the second embodiment is provided by cutting the ferrule 6 of the first embodiment at the thin portion 28 and separating it from the coupling member 2. Except that the ferrule 6 is not formed integrally with the coupling member 5, it is the same as the ferrule 6 of the first embodiment. Therefore, the components of the ferrule 6 of the second embodiment are designated by the same reference numerals as those of the first embodiment, and their descriptions will be omitted.

The coupling member 2 of the second embodiment is the same as the coupling member 2 of the first embodiment. Specifically, in the coupling member 2 of the second embodiment is formed by removing the ferrule 3 from the coupling member 2 provided as standard equipment in the bite type pipe connection structure for connecting the large diameter pipe P2. The ferrule 3 can be removed from the coupling member 2 by moving the ferrule 3 formed integrally with the coupling member 2 using fingers or a tool to break the thin portion 28.

Next, a method for connecting the small diameter pipe P3 in the second embodiment will be described.

First, in the bite type pipe connection structure for connection of a large diameter pipe as a standard specification, the coupling member 2 formed integrally with the ferrule 3 is removed from the joint main body 1. Then, the ferrule 3 is removed from the coupling member 2. Subsequently, the spacer 71 is inserted into the insertion port 16 of the joint main body 1. In addition, the coupling member 2 from which the ferrule 3 has been removed and the independent ferrule 6 separated from the coupling member 2 are externally arranged around the pipe P3. After that, the pipe P3 around which the coupling member 2 and the ferrule 6 are externally arranged is inserted into the spacer 71. Then, the tip of the pipe P3 is brought into contact with the step portion 73 of the spacer 71 to turn the coupling member 5 manually and to fasten to the joint main body 1. As a result, the pressing surface 29 of the coupling member 2 contacts the rear end of the ferrule 6. The state where the tip of the ferrule 6 is in contact with the cam surface 19 of the joint main body 1 is shown in Fig. 8.

After that, the coupling member 2 is turned manually and is further fastened. Then, as is the case with the first embodiment, the tip 38 of the ferrule 6 is inserted, in a wedge-like manner, between the pipe P3 and the spacer 71 to temporarily fix the pipe P3. When the coupling member 2 is further fastened, the front edge portion 3b and the rear edge portion 3a of the ferrule 6 bite into the pipe P3 as is the case with the first embodiment, and the pipe P3 is held and sealed. In the second embodiment, the coupling member for large diameter 2 is used as a coupling member. Therefore, there is a gap between the inner circumferential surface of the through hole 21 of the coupling member 2 and the outer circumferential surface of the pipe P3. However, this gap does not affect the sealing and holding of the pipe P3. The pressing surface 29 of the coupling member 2 is provided for a ferrule for large diameter. However, in the case where the difference in the outer diameter between the large diameter pipe P2 and the small diameter pipe P3 is small, the rear end of the ferrule 6 is located in substantially the same position, and the pressing surface 29 presents no particular problem.

The second embodiment has the same advantages as (1) to (5), (7) and (8) in the first embodiment. According to the second embodiment, an independent ferrule for small diameter 6 is used. Therefore, using the coupling member for large diameter 2 formed as standard equipment from which the ferrule for large diameter 3 has been removed, the small diameter pipe P3 can be connected. Consequently, commonality of components is provided and production cost is reduced.

### (Third embodiment)

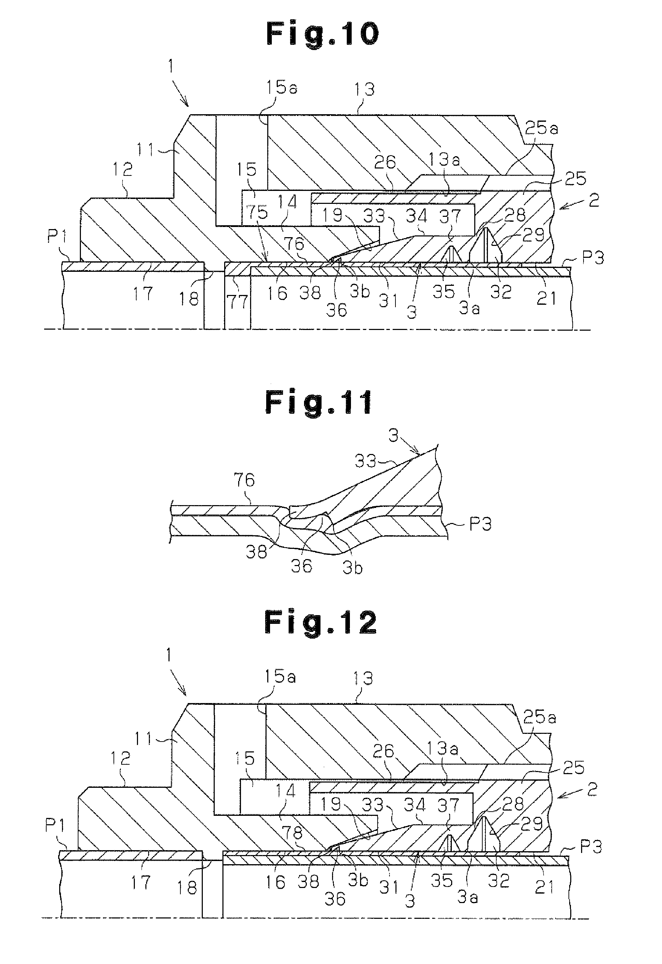

Next, a third embodiment will be described with reference to Figs. 10 and 11. In the third embodiment, the bite type pipe connection structure for connecting a large diameter pipe is the same as the first embodiment, and the bite type pipe connection structure for connecting a small diameter pipe is different from the first embodiment. The same portions as those of the first embodiment or the portions corresponding to those of the first embodiment are designated by the same reference numerals and their descriptions will be omitted.

In the third embodiment, as shown in Fig. 10, the coupling member 2 of the first embodiment for connecting the large diameter pipe P2, which is formed integrally with the ferrule 3, is used. In this case, a gap is created between the outer circumferential surface of the pipe P3 and the inner circumferential surface of the insertion-through hole 31 of the ferrule 3. As a result, the front edge portion 3b and the rear edge portion 3a of the ferrule 3 cannot bite into the pipe P3 firmly. Therefore, in the third embodiment, a cylindrical spacer that is different from the spacer 71 of the first embodiment is inserted between the outer circumferential surface of the pipe P3 and the inner circumferential surface of the insertion-through hole 31. The outer diameter and the inner diameter of this spacer are the same as those of the spacer 71 of the first embodiment. In the third embodiment, to simplify the configuration of the spacer, a spacer 75 in which both spacers are integrated is adopted. The spacer 75 extends from the step portion 18 of the joint main body 1 to the through hole 21 of the coupling member 2. The spacer 75 has a cylindrical portion 76. In the third embodiment, the cylindrical portion 76 functions as insertion port adjusting means and insertion-through hole adjusting means. On the front end of the spacer 75, a step portion 77 as a step portion for small diameter is formed, just as the step portion 73 of the first embodiment.

In the third embodiment, in the case where the pipe P3 is connected, first, the spacer 75 is inserted in the insertion port 16 of the joint main body 1 and the coupling member 2 and the ferrule 3 are externally arranged around the pipe P3. Next, the pipe P3 around which the coupling member 2 and the ferrule 3 are externally arranged is inserted into the spacer 75. Then, the tip of the pipe P3 is brought into contact with the step portion 77 of the spacer 75. At this time, the pipe P3 is inserted into the spacer 75 in the joint main body 1 so that the coupling member 2 and the ferrule 3 are externally arranged around the spacer 75. Next, the coupling member 2 is turned manually and fastened to the joint main body 1. Consequently, the tip 38 of the ferrule 3 is inserted, in a wedge-like manner, between the outer circumferential surface of the spacer 75 and the inner circumferential surface of the insertion port 16 to temporarily fix the pipe P3. After that, using a tool, the coupling member 2 is further fastened to the joint main body 1. As a result, as shown in Fig. 11, the front edge portion 3b of the ferrule 3 bites into the cylindrical portion 76 of the spacer 75 and also bites into the pipe P3. In addition, the tapered surface 33 of the ferrule 3 is brought into close contact with the cam surface 19 of the joint main body 1. Accordingly, the space between the pipe P3 and the spacer 75, the space between the spacer 75 and the ferrule 3 and the space between the ferrule 3 and the cam surface 19 of the joint main body 1 are sealed. The rear edge portion 3a of the ferrule 3 also bites into the cylindrical portion 76 of the spacer 75 and bites into the pipe P3, in the same way as the front edge portion 3b. Thus, the ferrule 3 holds the pipe P3.

The third embodiment has the same advantages as (1), (2), (4), (7) and (8) in the first embodiment.

According to the third embodiment, a spacer serving as insertion-through hole adjusting means, a spacer serving as insertion-through hole adjusting means and a step portion 77 serving as a step portion for small diameter are formed integrally into a single spacer 75. Therefore, the man-hour for building in parts at pipe connection is reduced and the man-hour for parts control is also reduced. Furthermore, since the spacer 75 has a substantially cylindrical ring shape, its structure is simplified.

### (Fourth embodiment)

Next, a fourth embodiment will be described with reference to Fig. 12. In the fourth embodiment, the spacer of the third embodiment is changed. In Fig. 12, the same portions as those of the third embodiment or the portions corresponding to those of the third embodiment are designated by the same reference numerals and their descriptions will be omitted.

In the fourth embodiment, a cylindrical spacer 78 is inserted between the outer circumferential surface of the pipe P3 and the inner circumferential surface of the insertion-through hole 31. The spacer 78 is provided for bridging a gap between the outer circumferential surface of the pipe P3 and the inner circumferential surface of the insertion-through hole 31 and a gap between the inner circumferential surface of the insertion port 16 and the outer circumferential surface of the pipe P3. The spacer 78 extends from the step portion 18 of the joint main body 1 to the front portion of the through hole 21 of the coupling member 2. The spacer 78 is formed by removing the step portion 77 from the spacer 75 of the third embodiment. The fourth embodiment relates to a case where the difference between the outer diameter of the pipe P3 and the outer diameter of the pipe P2 is not very large. When the spacer 78 is inserted into the insertion port 16 of the joint main body 1, since the difference in level of the step portion 18 is larger than the thickness of the spacer 78, the position of the tip of the pipe P3 can be regulated on the inner circumference of the spacer 78 by the step portion 18. Consequently, in the fourth embodiment, the spacer 78 functions as insertion port adjusting means and insertion-through hole adjusting means, and the step portion 18 functions not only as a step portion for large diameter but also as a step portion for small diameter.

The fourth embodiment has the same advantages as (1), (2), (7) and (8) in the first embodiment. In the case where the difference in the outer diameter between the large diameter pipe P2 and the small diameter pipe P3 is not large, the position of the tip of the pipe P3 can be regulated by the step portion 18 of the joint main body 1 without forming the step portions 73, 77 on the spacer. Thus, the structure of the spacer 78 can be further simplified.

### (Fifth embodiment)

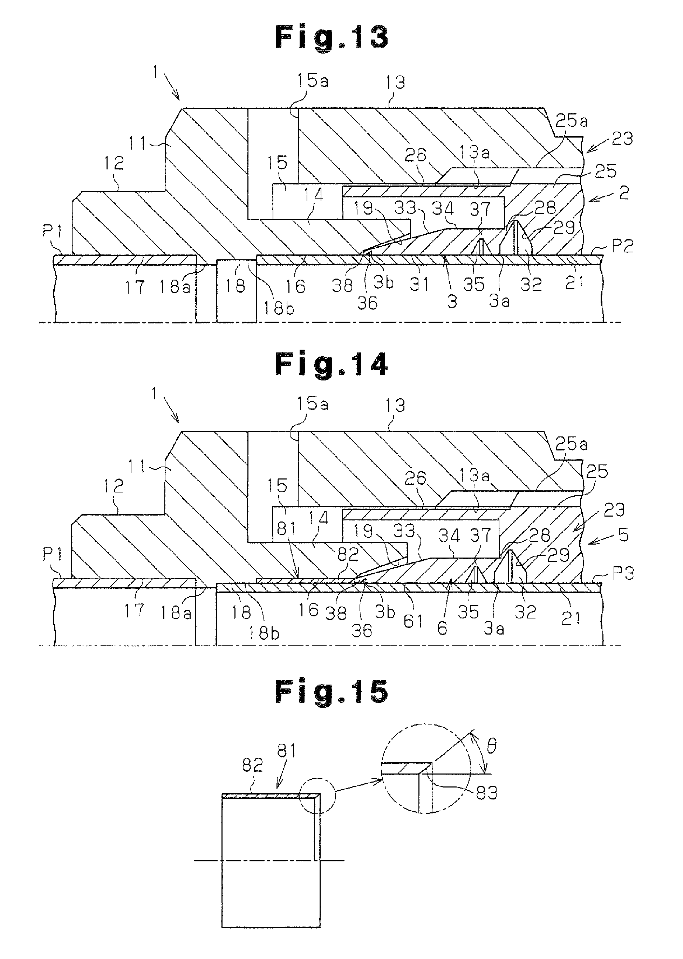

Next, a fifth embodiment will be described with reference to Figs. 13 to 15. In the fifth embodiment, the configuration of the step portion that regulates the position of the tip of the small diameter pipe P3 is changed. In Figs. 13 to 15, the same portions as those of the first embodiment or the portions corresponding to those of the first embodiment are designated by the same reference numerals and their descriptions will be omitted.

In the fifth embodiment, in addition to the point that the difference in level of the step portion 18 of the joint main body 1 is small compared to in the first embodiment, the point that a step portion for small diameter 18a in addition to the step portion 18 is provided is also different from the first embodiment. Furthermore, in the fifth embodiment, the shape of the spacer that is inserted into the insertion port 16 of the joint main body 1 is different from that of the first embodiment.

As shown in Fig. 14, the difference in level of the step portion 18 is substantially equal to the thickness of the cylindrical portion 72 of the spacer 71 in the first embodiment. Therefore, on the axis of the step portion 18, a hole 18b having a substantially same outer diameter as the small diameter pipe P3 is formed. The hole 18b of the step portion 18 extends rearward and is formed as an insertion port for small diameter in which the tip of the pipe P3 is inserted, Inside the joint main body 1, the step portion 18a as a step portion for small diameter is formed adjacent to the hole 18b of the step portion 18.

Accordingly, in the case where the small diameter pipe P3 is connected, as shown in Fig. 14, a spacer 81 as insertion port adjusting means is inserted in the insertion port 16 of the joint main body 1 as is the case with the first embodiment. However, unlike the first embodiment, the step portion 73 is not formed on the spacer 81. That is, the spacer 81 is formed into a cylindrical shape as shown in Fig. 15. The outer diameter of a cylindrical portion 82 is substantially the same as the inner diameter of the insertion port 16 and the inner diameter of the cylindrical portion 82 is substantially the same as the outer diameter of the pipe P3. Also, the axial length of the cylindrical portion 82 is substantially the same as the axial length of the insertion port 16. With the spacer 81 being attached to the insertion port 16, a rear end surface 83 of the cylindrical portion 82 is positioned at the rear end of the insertion port 16. The rear end surface 83 of the cylindrical portion 82 is inclined at the same inclination angle as that of the inner circumferential surface closer to the axis of the cam surface 19.

In the fifth embodiment, when the large diameter pipe P2 is connected, the tip of the pipe P2 is inserted into the insertion port 16 of the joint main body 1, and the position of the tip of the pipe P2 is regulated by the step portion 18. In this respect, the fifth embodiment is the same as the first embodiment. The fifth embodiment, however, is different from the first embodiment in that the step portion 18a that is not used exists.

In the fifth embodiment, in the case where the small diameter pipe P3 is connected, the ferrule for large diameter 3 and the coupling member for large diameter 2 provided as standard equipment in the bite type pipe connection structure are removed from the joint main body 1. Next, the spacer 81 is inserted in the insertion port 16 of the joint main body 1. Also, the coupling member for small diameter 5 formed integrally with the ferrule for small diameter 6 is externally arranged around the small diameter pipe P3. In this state, the pipe P3 is inserted into the hole 18b of the step portion 18. At this time, the position of the tip of the pipe P3 is regulated by the step portion for small diameter 18a. In this respect, the fifth embodiment is different from the first embodiment. The subsequent pipe connection procedure is the same as that of the first embodiment.

In the fifth embodiment, the joint main body 1 having the step portion 18a is used in place of the step portion 73 of the spacer 71 of the first embodiment, and according to this change, the shape of the spacer is changed. Therefore, the fifth embodiment has the same advantages as (1) to (3) and (5) to (8) in the first embodiment.

### (Sixth embodiment)

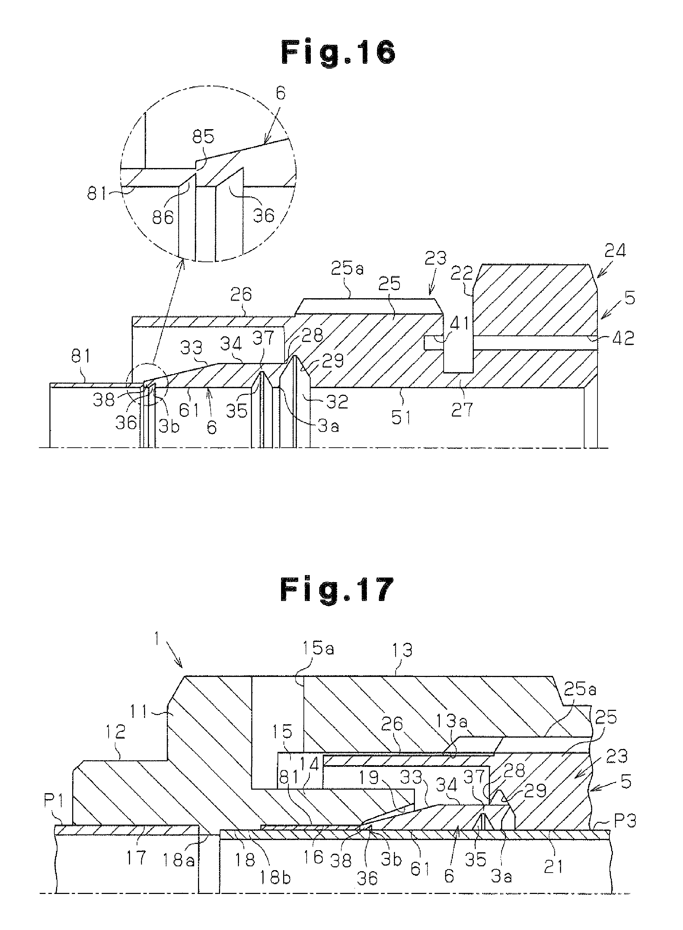

Next, a sixth embodiment will be described with reference to Figs. 16 and 17. In the sixth embodiment, the spacer 81 is formed integrally with the ferrule 6 of the fifth embodiment. In Figs. 16 and 17, the same portions as those of the fifth embodiment or portions corresponding to those of the fifth embodiment are designated by the same reference numerals and their descriptions will be omitted.

As shown in Figs. 16 and 17, the coupling member 5, the ferrule 6 and the spacer 81 are integrated. The ferrule 6 and the spacer 81 are separated by the rotation torque when the coupling member 5 is turned manually and fastened. As a result, the sixth embodiment has the same configuration as the fifth embodiment. Therefore, a coupling portion 85 of the ferrule 6 and the spacer 81 is formed as a thin portion by an incision 86.

In the sixth embodiment, in the case where the small diameter pipe P3 is connected, first, the component into which the coupling member 5, ferrule 6 and spacer 81 are integrated, is externally arranged around the pipe P3. Next, the component is inserted into the joint main body 1. At this time, the tip of the pipe P3 is inserted in the hole 18b as an insertion port for small diameter of the step portion 18, and the spacer 81 is fitted in between the insertion port 16 of the joint main body 1 and the pipe P3. Then, the coupling portion 85 is cut to separate the spacer 81 and the ferrule 6 by turning the coupling member 5 manually and fastening it to the joint main body 1. The tip 38 of the ferrule 6 is inserted, in a wedge-like manner, between the spacer 81 and the pipe P3 to temporarily fix the pipe P3 by turning the coupling member 5 manually and fastening it to the joint main body 1. The subsequent procedure is the same as in the fifth embodiment or the first embodiment.

As in the case with the fifth embodiment, the sixth embodiment has the same advantages as (1) to (3) and (5) to (8) in the first embodiment. Since the coupling member 5, the ferrule 6 and the spacer 81 are integrated, the man-hour of parts control is reduced.

### (Seventh embodiment)

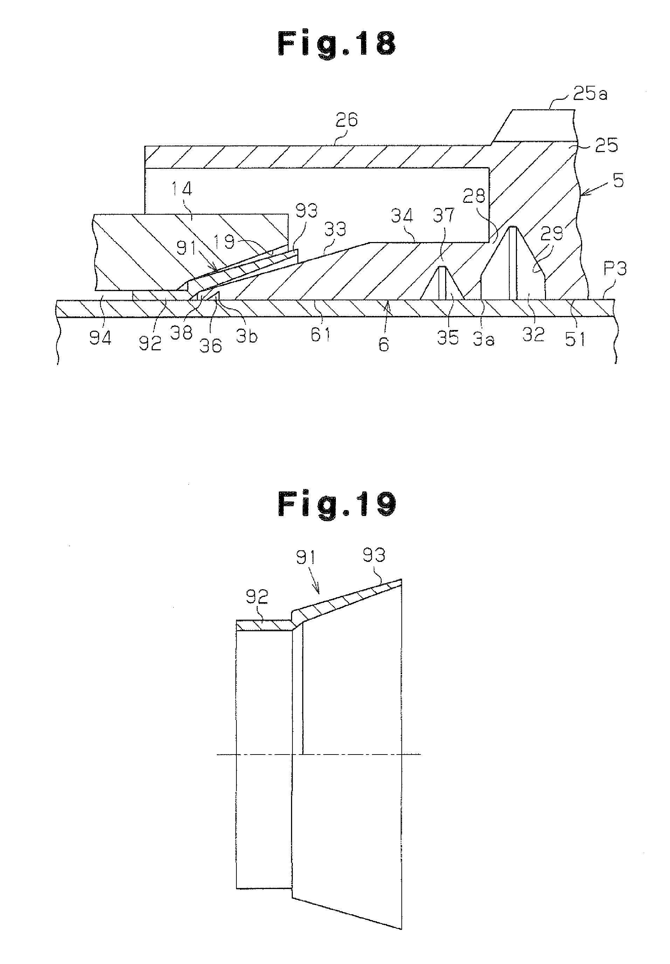

Next, a seventh embodiment will be described with reference to Figs. 18 and 19. The seventh embodiment is the same as the fifth embodiment except that the spacer is changed to a tapering piece. In Figs. 18 and 19, the same portions as those of the fifth embodiment or portions corresponding to those of the fifth embodiment are designated by the same reference numerals and their descriptions will be omitted.

In the seventh embodiment, a tapering piece 91 is used in place of the spacer 81 of the fifth embodiment. As shown in Figs. 18 and 19, a cylindrical portion 92 and a tapered portion 93 are integrated to form the tapering piece 91. The outer diameter of the cylindrical portion 92 is substantially the same as the inner diameter of the insertion port 16, and the inner diameter of the cylindrical portion 92 is substantially the same as the outer diameter of the pipe P3. The axial length of the cylindrical portion 92 is shorter than that of the insertion port 16. Therefore, the cylindrical portion 92 of the tapering piece 91 is inserted in the vicinity of the entrance of the insertion port 16 only. The tapered portion 93 is formed by a wall portion extending from the rear end of the cylindrical portion 92 to the obliquely rearward. The tapered portion 93 is located so that it faces the cam surface 19 of the joint main body 1 and is formed into a tapered shape to the obliquely rearward. The outer circumferential surface of the tapered portion 93 is formed substantially equal to the tapered surface 33 of the ferrule 6, and the inner circumferential surface of the tapered portion 93 is formed substantially equal to the cam surface that is formed for a small diameter pipe.

In the seventh embodiment, in the case where the large diameter pipe P2 is connected, since the tapering piece 91 is not used, the configuration is exactly the same as the fifth embodiment shown in Fig. 13. In the case where the small diameter pipe P3 is connected, the ferrule for large diameter 3 and the coupling member for large diameter 2 provided as standard equipment in the bite type pipe connection structure are removed from the joint main body 1, as in the case with the fifth embodiment. Then, the cylindrical portion 92 of the tapering piece 91 is inserted into the insertion port 16 of the joint main body 1, so that the tapered portion 93 is located to face the cam surface 19. On the other hand, the coupling member 5 that is formed integrally with the ferrule 6 is externally arranged around the pipe P3. The pipe P3 is inserted into the cylindrical portion 92 of the tapered portion 93 and the tip of the pipe P3 is inserted into the insertion port for small diameter of the step portion 18. As a result, the position of the tip of the pipe P3 is regulated by the step portion 18a. After that, the coupling member 5 that is formed integrally with the ferrule 6 is fastened to the joint main body 1 while being externally arranged around the pipe P3.

In this fastening work, the tip of the ferrule 6 is brought into contact with the inner circumferential surface of the tapered portion 93, and the tapered portion 93 is brought into close contact with the cam surface 19 of the joint main body 1. Therefore, when the coupling member 5 is turned manually and fastened, the tip 38 of the ferrule 6 is inserted in a wedge-like manner, between the cylindrical portion 92 and the pipe P3 while being guided by the inner circumferential surface of the tapered portion 93 to temporarily fix the pipe P3. At this time, the tip of the pipe P3 is supported by the inner circumferential surface of the insertion port for small diameter and the cylindrical portion 92 in the insertion port 16. Therefore, in the seventh embodiment, the insertion port adjusting means is formed of the insertion port for small diameter and the cylindrical portion 92. Accordingly, a gap 94 is created forward of the cylindrical portion 92, but the gap does not cause the axis of the pipe P3 to become offset. By the subsequent fastening, the pipe is sealed and supported as in the case with the first or fifth embodiment, except that the tip of the ferrule 6 is brought into contact with the tapered portion 93, and the tapered portion 93 is in close contact with the cam surface 19.

As in the case with the fifth embodiment, the seventh embodiment has the same advantages as (1) to (3) and (5) to (8) in the first embodiment. While the spacer of the fifth embodiment and others is thin and deformed easily, the tapering piece of the seventh embodiment has the advantages of having a sufficient strength and being resistant to deformation. The inner circumferential surface of the tapered portion 93 is formed into the same shape as the cam surface that is formed for a small diameter pipe. This allows the ferrule for small diameter to be deformed into a desired shape.

### (Eighth embodiment)

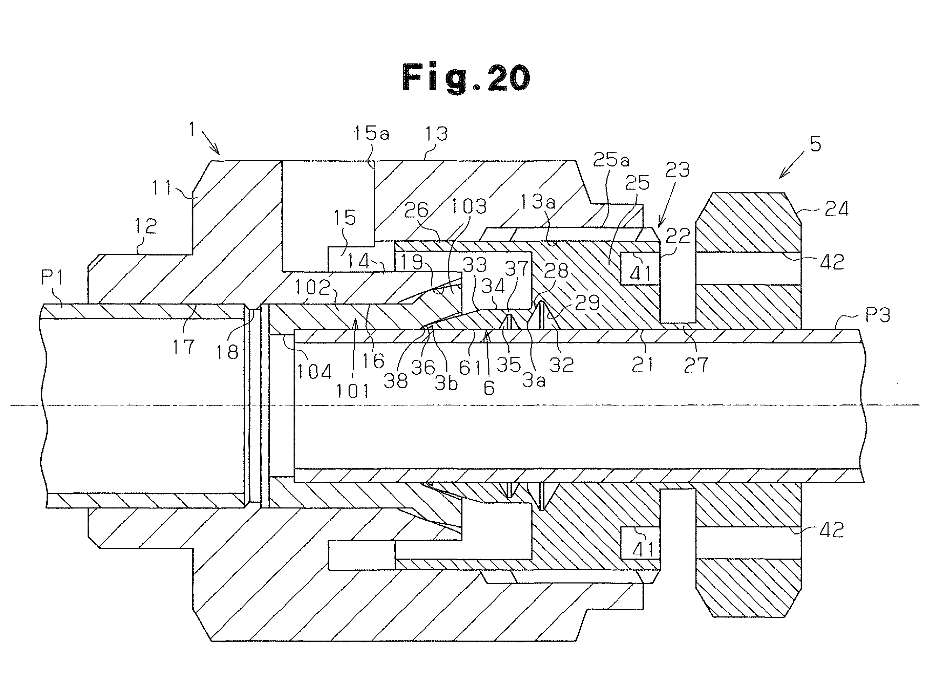

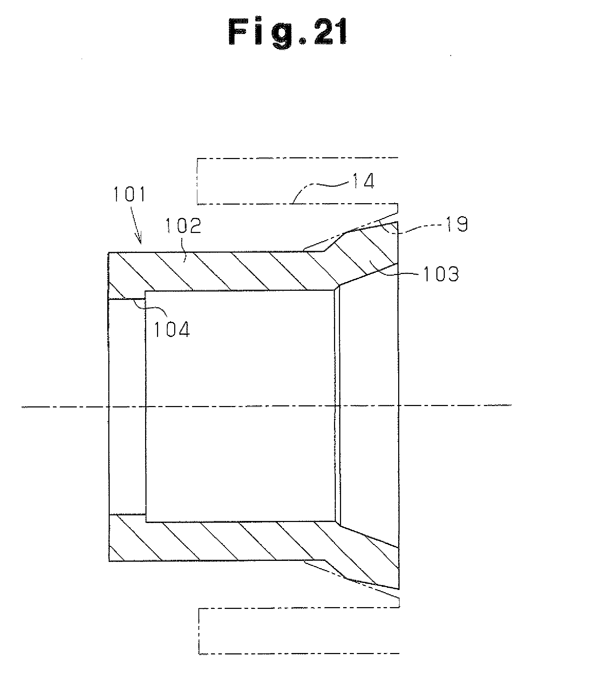

Next, an eighth embodiment will be described with reference to Figs. 20 and 21.

Each embodiment described above relates to a case in which the difference in the outer diameter between the large diameter pipe and the small diameter pipe is small. Specifically, the case is discussed in which an error occurs in the piping system due to a difference in the piping standard in inch size or millimeter size. In contrast, the eighth embodiment relates to a case in which the outer diameters of pipes are largely different, that is, a small diameter pipe having an outer diameter smaller than that of a large diameter pipe by one class or more is connected. Therefore, in the eighth embodiment, the spacer 71 of the first embodiment is changed to a tapering piece 101 as used in the seventh embodiment, and a coupling member for small diameter 5 and a ferrule for small diameter 6 as used in the fifth or seventh embodiment are used in place of the ferrule for large diameter 3 and the coupling member for large diameter 2. In Figs. 20 and 21, the same portions as those of the first, fifth and seventh embodiment embodiments or portions corresponding to those of the first, fifth and seventh embodiments are designated by the same reference numerals and their descriptions will be omitted.

The respective portions of the joint main body 1 of the eighth embodiment have different dimensions from those of the first embodiment, but the basic configuration of the eighth embodiment is the same as that of the first embodiment. The respective portions of the coupling member 5 and the ferrule 6 have different dimensions from those of the fifth and seventh embodiments, but the basic configuration of the eighth embodiment is the same as that of the fifth and seventh embodiments.

A cylindrical portion 102 that is inserted in the insertion port 16 and a tapered portion 103 located to face the cam surface 19 are formed integrally into the tapering piece 101, as shown in Figs. 20 and 21. The outer diameter of the cylindrical portion 102 is substantially the same as the inner diameter of the insertion port 16, and the inner diameter of the cylindrical portion 102 is substantially the same as the outer diameter of the small diameter pipe P3. Also, the axial length of the cylindrical portion 102 is slightly larger than the axial length of the insertion port 16. On the inner circumferential surface of the cylindrical portion 102, a step portion for small diameter 104 for positioning the tip of the pipe P3 (hereinafter, referred to as the step portion 104) is provided at the front end portion of the cylindrical portion 102.

The tapered portion 103 is formed by a wall portion extending from the rear end of the cylindrical portion 102 to obliquely rearward. The tapered portion 103 is located to face the cam surface 19 of the joint main body 1, and is formed into a tapered shape to obliquely rearward. The outer circumferential surface of the tapered portion 103 is a substantially conical surface. More specifically, the tapered angle relative to the axis of the outer circumferential surface of the tapered portion 103 is smaller at the rear part of the tapered portion 103 than at the front part thereof. The outer circumferential surface of the tapered portion 103 is in line contact with the cam surface 19 of the joint main body 1 along the boundary portion between the front part and the rear part. Furthermore, the inner circumferential surface of the tapered portion 103 is formed substantially equal to the cam surface that is formed for a small diameter pipe.

In the eighth embodiment, in the case where the large diameter pipe P2 is connected, the tapering piece 101 is not used. Therefore, the structure is exactly the same as the first embodiment. In the case where the small diameter pipe P3 is connected, the coupling member for small diameter 5 that is formed integrally with the ferrule for small diameter 6 is used in place of the ferrule for large diameter 3 and the coupling member for large diameter 2 provided as standard equipment in the bite type pipe connection structure. First, the cylindrical portion 102 of the tapering piece 101 is inserted in the insertion port 16 of the joint main body 1 from which the ferrule for large diameter 3 and the coupling member for large diameter 2 have been removed. At this time, the cylindrical portion 102 is inserted along the boundary portion of the tapered portion 103 until it is brought into line contact with the cam surface 19. As a result, the tapered portion 103 is located to face the cam surface 19, and being in line contact with the cam surface 19. On the other hand, the coupling member 5 that is formed integrally with the ferrule 6 is externally arranged around the pipe P3. Next, the pipe P3 is inserted into the cylindrical portion 102 to bring the tip of the pipe P3 into contact with the step portion 104, so that the position of the tip of the pipe P3 is regulated by the step portion 104. After that, the coupling member 5 that is external arranged around the pipe P3 is turned manually to screw into the joint main body 1. In the eighth embodiment, the insertion port adjusting means is formed by the cylindrical portion 102 and the insertion-through hole adjusting means is formed by the ferrule 6.

When the coupling member 5 is turned manually and fastened, the tip of the ferrule 6 is brought into contact with the inner circumferential surface of the tapered portion 103. When the coupling member 5 is turned manually and further fastened, the tip 38 of the ferrule 6 is inserted, in a wedge-like manner, between the cylindrical portion 102 and the pipe P3 while being guided by the inner circumferential surface of the tapered portion 103 to temporarily fix the pipe P3. By the subsequent fastening, the pipe P3 is sealed and supported as in the case with the first and seventh embodiments, except that the boundary portion of the tapered portion 103 is in line contact with the cam surface 19 to seal the outer circumferential surface of the tapered portion 103 and the cam surface 19.

The eighth embodiment has the same advantages as the first embodiment. In the eighth embodiment, the thickness of the tapering piece 101 is large. Therefore, the eighth embodiment can be applied to connection of a small diameter pipe having an outer diameter that is largely different from that of a large diameter pipe P2.

### (Ninth embodiment)

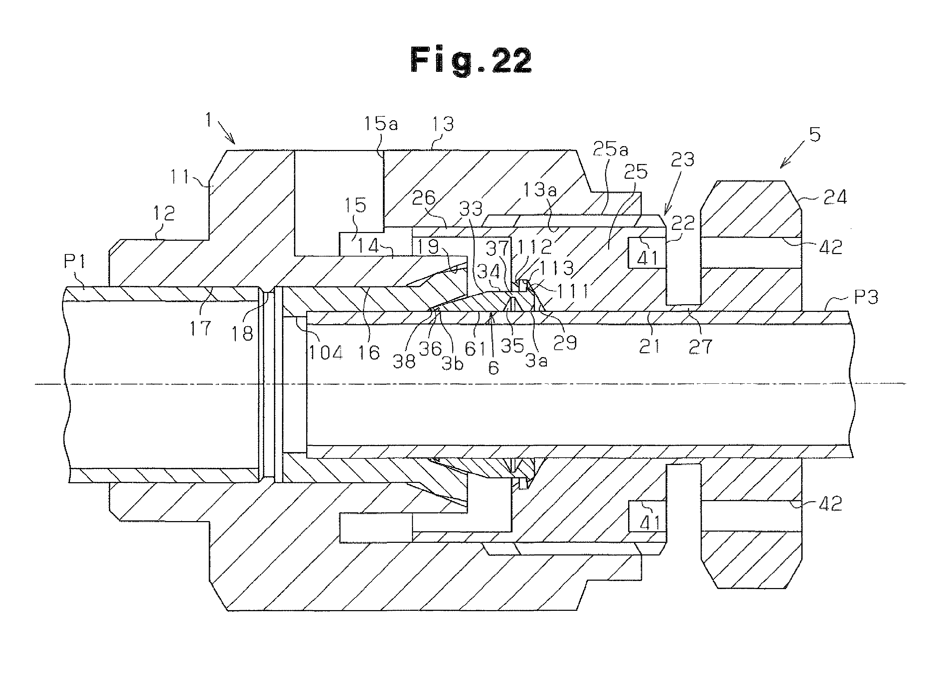

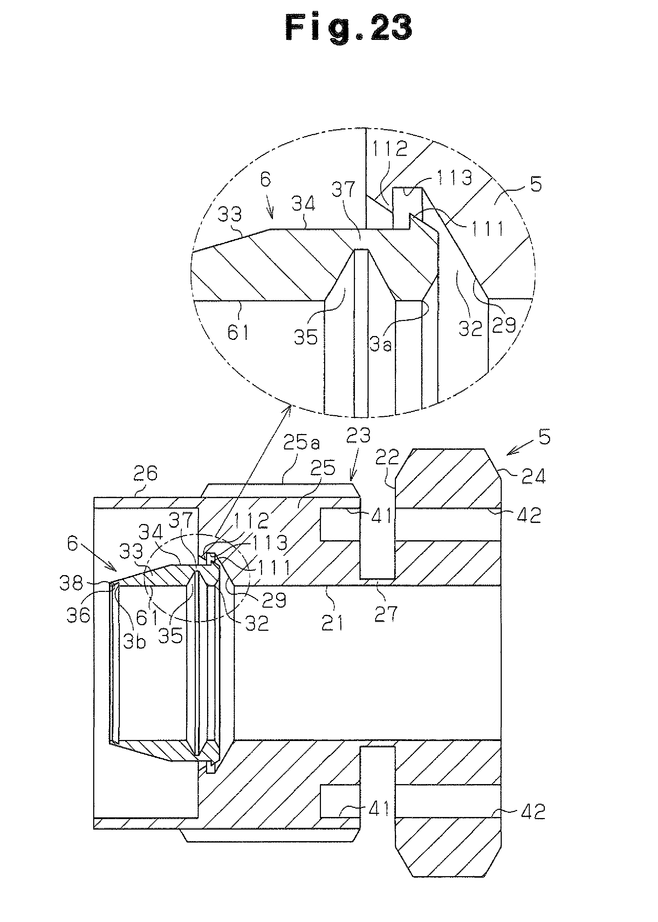

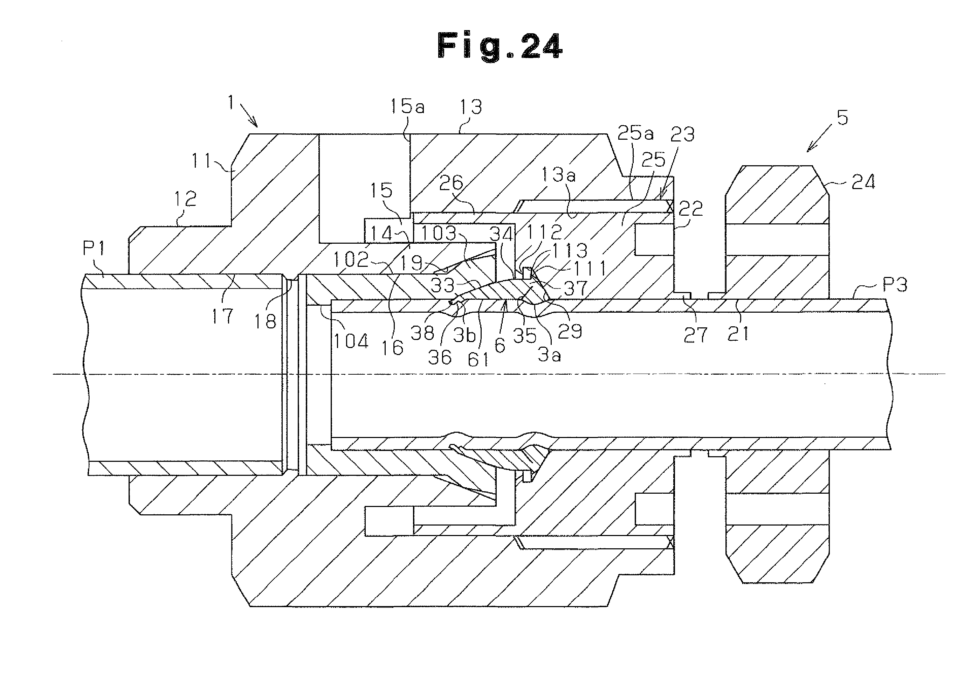

Next, a ninth embodiment will be described with reference to Figs. 22, 23 and 24.

The ninth embodiment is the same as the eighth embodiment except that the ferrule 6 is formed as an independent ferrule separately from the coupling member 5, and the ferrule 6 can be temporarily held to the coupling member 5. In Figs. 22, 23 and 24, the same portions as those of the eighth embodiment or portions corresponding to those of the eighth embodiment are designated by the same reference numerals and their descriptions will be omitted.

In the ninth embodiment, the ferrule 6 is formed independently of the coupling member 5, that is, formed separately from the coupling member 5. The ferrule 6 is also temporarily held to the front portion of the coupling member 5 in the step before the coupling member 5 is fastened to the joint main body 1. Therefore, at the rear end of the ferrule 6, a protrusion 111 projecting outward in the axial direction is formed. On the other hand, at the front end portion of the coupling member 5, a protrusion 112 projecting inward in the axial direction is formed. On the coupling member 5, an enlarged diameter portion 113 is formed adjacent to the protrusion 112. The protrusion 112 and the enlarged diameter portion 113 are provided to press the protrusion 111 of the ferrule 6 in the coupling member 5 to temporarily hold the ferrule.

According to this configuration, when the protrusion 111 of the ferrule 6 is pressed in the axial direction against the protrusion 112 of the coupling member 5 in the step before the coupling member 5 is fastened to the joint main body 1, the protrusion 111 is pressed in the enlarged diameter portion 113 with the protrusion 112, so that the ferrule 6 is temporarily held to the coupling member 5. In addition, both the rear surface of the protrusion 111 and the front surface of the protrusion 112 are formed into a tapered shape, allowing the ferrule 6 to be smoothly guided and to be easily pressed in the coupling member 5. The protrusion 111 and the protrusion 112 are formed in a dimension such that the ferrule 6 can be removed from the coupling member 5 by strongly pulling the ferrule 6 in the opposite direction.

In this embodiment, the ferrule 6 is temporarily held to the coupling member 5 in the step before the coupling member 5 is fastened to the joint main body 1. Therefore, as in the case of the eighth embodiment, a component in which the ferrule 6 is temporarily held to the coupling member 5 can be used in place of a component in which the ferrule 6 is formed integrally with the coupling member 5. In other words, in this embodiment, it is not that the ferrule 6 is separated from the coupling member 5 in the middle of the fastening process of the coupling member 5, but that the ferrule 6 is previously separated before the fastening process. In this respect, this embodiment is different from the eighth embodiment but follows substantially the same pipe connection procedure.

This embodiment has the same advantages as the eighth embodiment. In the ninth embodiment, since the ferrule 6 is temporarily held to the coupling member 5, the ferrule 6 and the coupling member 5 can be handled as one component, and this simplifies the fastening work. Compared to the case, such as the second embodiment, where an independent ferrule is used, this embodiment prevents the ferrule from being lost during the pipe connection work and the like.

### (Modifications)

In the fourth embodiment, as an example, in the case where the difference between the outer diameter of a large diameter pipe and that of a small diameter pipe is small, the step portion 18 of the joint main body 1, in place of the step portion 77 of the spacer 75, functions as a step portion for a small diameter pipe. However, by making the difference in level of the step portion 18 larger than the thickness of the pipe P2, this structure can be adopted even if the difference between the outer diameter of a large diameter pipe and that of a small diameter pipe is large.

In the second embodiment, the independent ferrule 6 that is a single member may be formed by a front ferrule and a back ferrule, for example. In the second embodiment, using the same structure as in the ninth embodiment, the ferrule for small diameter 6 formed of a single member may be temporarily held to the coupling member for small diameter 5.

In the first, third and fifth to seventh embodiments, the ferrule for small diameter 6 is formed integrally with the coupling member 5, but the ferrule for small diameter 6 may be formed separately from the coupling member for small diameter 5. In this case, the ferrule for small diameter 6 may be formed of a single or a plurality of members. In the case where the ferrule for small diameter 6 is formed of a single member, the ferrule for small diameter 6 may be temporarily held to the coupling member for small diameter 5, using the same structure as in the ninth embodiment.

In the first to ninth embodiments, the ferrule for large diameter 3 may be formed separately from the coupling member for large diameter 2. In this case, the ferrule for large diameter 3 may be formed of a single or a plurality of members. In the case where the ferrule for large diameter 3 is formed of a single member, the ferrule for large diameter 3 may be temporarily held to the coupling member for large diameter 2, using the same structure as in the ninth embodiment.

In the eighth embodiment, the ferrule for small diameter 6 may be formed separately from the coupling member for small diameter 5, and may be a ferrule that is not temporarily held to the coupling member for small diameter 5. In this case, the ferrule for small diameter 6 may be formed of a single or a plurality of members.

In the eighth and ninth embodiments, the front portion and the rear portion of the outer circumferential surface of the tapered portion 103 are formed with different inclination angles to the axis so that the outer circumferential surface of the tapered portion 103 is brought into line contact with the cam surface 19. Besides, by connecting the front and rear portions of the outer circumferential surface in a smooth curve, the outer circumferential surface of the tapered portion 103 may be brought into line contact with the cam surface 19.

In the seventh embodiment, the length of the cylindrical portion 92 may be the same as that of the insertion port 16, and the step portion 73 in the first embodiment may be formed on the front end portion of the cylindrical portion 92. In this case, for the joint main body 1 of the first embodiment, the tapering piece 91 of the seventh embodiment can be used as insertion port adjusting means and a step portion for small diameter.

In the sixth embodiment, since the tip 38 of the ferrule 6 is thick, a difference in level exists on the upper surface of the coupling portion 85 of the tip 38 of the ferrule 6 and the spacer 81. But this difference in level may be omitted. This facilitates turning of the coupling member 5 manually and temporarily fixing of the pipe P3. That is, the tip 38 of the ferrule 6 can be easily inserted in a wedge-like manner between the spacer 81 and the pipe P3. In this case, the bite amount of the front edge portion 3b into the pipe P3 can be set at an appropriate level by changing the thickness of the front edge portion 3b of the ferrule 6. At this time, it is preferable to move the position of the second notch 36 rearward.

The present invention is applied to a freezing device such as an air conditioner. The present invention may be applied to other uses such as water piping and hydraulic piping.

In each embodiment, in order to connect an apparatus and a pipe, the socket portion 12 of the joint main body 1 is brazed to the pipe P1 that is led out from the apparatus. An external thread may be formed on the outer circumferential surface of the socket portion 12 to screw the socket portion 12 into the pipe P1.

In the first to ninth embodiments, the coupling structure and the method for connecting pipes of the joint main body 1 and the coupling member 2 may be modified within the scope not departing from the spirit of the present invention.

## Claims

1. A bite type pipe connection structure comprising: a joint main body;
a coupling member for large diameter that is screwed into the joint main body and externally arranged around a large diameter pipe to be connected to the joint main body; and a ferrule for large diameter that is externally arranged, together with the coupling member for large diameter, around the large diameter pipe and holds the large diameter pipe by biting into the large diameter pipe, wherein an insertion port for large diameter through which the large diameter pipe is inserted is formed on the axis of the joint main body, a step portion for large diameter that regulates a position of a tip of the large diameter pipe is formed at a deepest portion of the insertion port for large diameter, a cam surface against which the tip of the ferrule for large diameter is pressed is formed at an entrance of the insertion port for large diameter, a through hole for large diameter through which the large diameter pipe is passed is formed on the axis of the coupling member for large diameter, a pressing surface against which the ferrule for large diameter is pressed is provided on a lateral side of the coupling member for large diameter closer to the joint main body, and an insertion-through hole for large diameter in which the large diameter pipe is inserted is formed on the axis of the ferrule for large diameter, and an outer circumferential surface of the ferrule for large diameter is a tapered surface reduced in diameter toward the joint main body,
the bite type pipe connection structure being **characterized by** insertion port adjusting means, which is used to connect the small diameter pipe to the joint main body and adjust a gap between the inner circumferential surface of the insertion port for large diameter and the outer circumferential surface of the small diameter pipe.

2. The bite type pipe connection structure according to claim 1, **characterized in that** the ferrule for large diameter is formed integrally with the coupling member for large diameter and is separated from the coupling member for large diameter when the coupling member for large diameter is fastened to the joint main body.

3. The bite type pipe connection structure according to claim 1, **characterized in that** the ferrule for large diameter is a separate body from the coupling member for large diameter, and is an independent ferrule formed of one or more members.

4. The bite type pipe connection structure according to claim 1, **characterized in that** the ferrule for large diameter is an independent ferrule formed separately from the coupling member for large diameter and formed of a single member, and is temporarily held to the coupling member for large diameter at a rear end of the ferrule for large diameter before the coupling member for small diameter is fastened to the joint main body.

5. The bite type pipe connection structure according to any one of claims 1 to 4, **characterized by** a step portion for small diameter that is used to connect the small diameter pipe to the joint main body and regulates the position of a tip of the small diameter pipe.

6. The bite type pipe connection structure according to claim 5, **characterized by** insertion-through hole adjusting means, which is used to connect the small diameter pipe to the joint main body and adjust a difference in dimension between the inner diameter of the insertion-through hole for large diameter of the ferrule for large diameter and the outer diameter of the small diameter pipe.

7. The bite type pipe connection structure according to claim 6, **characterized in that** the insertion port adjusting means is a spacer that has a substantially cylindrical shape with an outer diameter substantially equal to the inner diameter of the insertion port for large diameter, an inner diameter substantially equal to the outer diameter of the small diameter pipe and an axial length substantially equal to the length of the insertion port for large diameter, the spacer being inserted in the insertion port for large diameter with its edge closer to the coupling member aligned with an edge of the cam surface located opposite to the coupling member.

8. The bite type pipe connection structure according to claim 7, **characterized in that** an end surface of the spacer closer to the coupling member is inclined at the same inclination angle with the inner circumferential surface of the cam surface closer to the axis.

9. The bite type pipe connection structure according to claim 6, **characterized in that** the insertion port adjusting means has: an outer diameter substantially equal to the inner diameter of the insertion port for large diameter; an inner diameter substantially equal to the outer diameter of the small diameter pipe; a cylindrical portion that is inserted into the insertion port for large diameter; and a tapered portion that is formed of a wall portion facing the cam surface and having a tapered shape, the tapered portion being formed integrally with the cylindrical portion, wherein the outer circumferential surface of the tapered portion is formed substantially equal to the tapered surface of the ferrule for large diameter, and the inner circumferential surface of the tapered portion is formed substantially equal to the cam surface formed for the small diameter pipe.

10. The bite type pipe connection structure according to any one of claims 7 to 9, **characterized in that** the step portion for small diameter is a step portion formed integrally on the inner circumferential surface of the spacer at an end portion opposite to the coupling member.

11. The bite type pipe connection structure according to any one of claims 7 to 9, **characterized in that** a difference in level of the step portion for large diameter is formed to have the same dimension as the thickness of the cylindrical portion of the spacer, an insertion port for small diameter in which the tip of the small diameter pipe is inserted is formed on the step portion for large diameter, and the step portion for small diameter is formed at a deep end of the insertion port for small diameter.

12. The bite type pipe connection structure according to any one of claims 6 to 11, **characterized in that** the insertion-through hole adjusting means is a ferrule for small diameter having an insertion-through hole for small diameter in which the small diameter pipe is inserted, the ferrule for small diameter being used in place of the ferrule for large diameter.

13. The bite type pipe connection structure according to claim 12, **characterized by** a coupling member for small diameter that is used in place of the coupling member for large diameter, the coupling member for small diameter having a through hole for small diameter through which the small diameter pipe is passed.

14. The bite type pipe connection structure according to claim 13, **characterized in that** the ferrule for small diameter is formed integrally with the coupling member for small diameter and is separated from the coupling member for small diameter when the coupling member for small diameter is fastened to the joint main body.

15. The bite type pipe connection structure according to claim 12 or 13, **characterized in that** the ferrule for small diameter is a separate body from the coupling member for large diameter or the coupling member for small diameter, and is an independent ferrule formed of one or more members.

16. The bite type pipe connection structure according to claim 13, **characterized in that** the ferrule for small diameter is an independent ferrule formed separately from the coupling member for small diameter and formed of a single member, and is temporarily held to the coupling member for small diameter at a rear end of the ferrule for small diameter before the coupling member for small diameter is fastened to the joint main body.

17. The bite type pipe connection structure according to claim 6, **characterized in that** the insertion-through hole adjusting means is a spacer that has a substantially cylindrical shape with an outer diameter substantially equal to the inner diameter of the insertion port for large diameter and an inner diameter substantially equal to the outer diameter of the small diameter pipe, and the spacer is inserted into the insertion-through hole for large diameter from the insertion port for large diameter, the insertion-through hole adjusting means being also used as the insertion port adjusting means.

18. The bite type pipe connection structure according to claim 6, **characterized in that** the insertion-through hole adjusting means is a ferrule for small diameter having an insertion-through hole for small diameter in which the small diameter pipe is inserted, the ferrule for small diameter being used in place of the ferrule for large diameter, wherein a spacer serving as the insertion port adjusting means is formed integrally at the tip of the ferrule for small diameter, and the spacer has a substantially cylindrical shape with an outer diameter substantially equal to the inner diameter of the insertion port for large diameter and an inner diameter substantially equal to the outer diameter of the small diameter pipe, the spacer being formed insertably to the insertion port for large diameter, and separated from the ferrule for small diameter before the ferrule for small diameter bites into the small diameter pipe during the process of fastening the coupling member to the joint main body.

19. The bite type pipe connection structure according to claim 17, **characterized in that** the step portion for small diameter is a step portion formed integrally on the inner circumferential surface of the spacer at an end portion opposite to the coupling member.

20. The bite type pipe connection structure according to claim 17 or 18, **characterized in that** a difference in level of the step portion for large diameter is formed to have the same dimension as the thickness of the cylindrical portion of the spacer, an insertion port for small diameter in which the tip of the small diameter pipe is inserted is formed on the step portion, and the step portion for small diameter is formed at a deep end of the insertion port for small diameter.

21. The bite type pipe connection structure according to claim 6, **characterized in that** the insertion port adjusting means has an outer diameter substantially equal to the inner diameter of the insertion port for large diameter, an inner diameter substantially equal to the outer diameter of the small diameter pipe, a cylindrical portion that is inserted in the insertion port for large diameter, and a tapered portion that is formed by a wall portion facing the cam surface and having a tapered shape, the tapered portion being formed integrally with the cylindrical portion, wherein the outer circumferential surface of the tapered portion is in line contact with the cam surface, and the inner circumferential surface of the tapered portion is formed substantially equal to the cam surface for the small diameter pipe,
wherein the insertion-through hole adjusting means is a ferrule for small diameter having an insertion-through hole for small diameter in which the small diameter pipe is inserted, the ferrule for small diameter being used in place of the ferrule for large diameter, and
wherein the bite type pipe connection structure further comprising a coupling member for small diameter that is used in place of the coupling member for large diameter, and has a through hole for small diameter through which the small diameter pipe is passed.

22. The bite type pipe connection structure according to claim 21, **characterized in that** the step portion for small diameter is a step portion formed integrally on the inner circumferential surface of the cylindrical portion at an end opposite to the coupling member.

23. The bite type pipe connection structure according to claim 21 or 22, **characterized in that** the ferrule for small diameter is formed integrally with the coupling member for small diameter, and is separated from the coupling member for small diameter when the coupling member for small diameter is fastened to the joint main body.

24. The bite type pipe connection structure according to claim 21 or 22, **characterized in that** the ferrule for small diameter is a separate body from the coupling member for small diameter, and is an independent ferrule formed of one or more members.

25. The bite type pipe connection structure according to claim 21 or 22, **characterized in that** the ferrule for small diameter is an independent ferrule formed separately from the coupling member for small diameter and formed of a single member, and is temporarily held to the coupling member for small diameter at the rear end of the ferrule for small diameter before the coupling member for small diameter is fastened to the joint main body.

26. A valve **characterized in that** the bite type pipe connection structure according to any one of claims 1 to 25 is used in a pipe joint portion.

27. A bite type pipe joint **characterized in that** the bite type pipe connection structure according to any one of claims 1 to 25 is used in a pipe joint portion.

28. A freezing device **characterized in that** the valve according to claim 26 is used in a refrigerant circuit.

29. A freezing device **characterized in that** the bite type pipe joint according to claim 27 is used in a refrigerant circuit.
